(19) Europäisches Patentamt
European Patent Office
Office européen des brevets

(11) **EP 2 118 542 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(21) Anmeldenummer: **08700517.9**

(22) Anmeldetag: **10.01.2008**

(51) Int Cl.:
*F16K 25/00* *(2006.01)* *F16K 1/42* *(2006.01)*

(86) Internationale Anmeldenummer:
**PCT/CH2008/000012**

(87) Internationale Veröffentlichungsnummer:
**WO 2008/083509 (17.07.2008 Gazette 2008/29)**

(54) **MIKROVENTIL**

MICRO-VALVE

MICROSOUPAPE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.01.2007 CH 23072007**

(43) Veröffentlichungstag der Anmeldung:
**18.11.2009 Patentblatt 2009/47**

(73) Patentinhaber: **Fritz Gyger Ag**
**3645 Thun-Gwatt (CH)**

(72) Erfinder:
• **GYGER, Fritz**
**CH-3645 Gwatt (CH)**

• **GYGER, Reto**
**CH-3645 Gwatt (CH)**

(74) Vertreter: **Rentsch Partner AG**
**Bellerivestrasse 203**
**Postfach**
**8034 Zürich (CH)**

(56) Entgegenhaltungen:
DE-A1- 4 215 892    DE-A1- 19 509 776
DE-A1- 19 527 049    FR-A- 981 999
JP-A- 9 068 134    US-A- 4 228 821
US-A- 4 606 367    US-A1- 2004 041 709
US-B1- 6 173 494

**Beschreibung**

## FELD DER ERFINDUNG

Seit längerem sind Mikroventile bekannt, welche zum Dosieren von kleinsten Mengen und für entsprechend hohe Schaltfrequenzen geeignet sind. So werden beispielsweise von der Anmelderin seit Jahren äusserst erfolgreich Mikroventile, zum Beispiel modulare Mikroventile verschiedener Baureihen hergestellt und vertrieben, die in einem breiten Bereich von technischen und wissenschaftlichen Anwendungen zum Einsatz kommen. Die Anwendungsmöglichkeiten umfassen industrielle Tintenstrahldrucker, Drucker für Brailleschrift, die Chemische Analysentechnik (Laborautomation, Life Science), Anlagen zum High-Troughput-Screening, Mikro- und Nano-Dosiertechnik. Es kann dabei mit niedrigviskosen Medien wie Wasser, wässrigen Lösungen, organischen und oder anorganischen Lösungsmitteln, sowie speziell auch mit hochviskosen Medien wie Ölen, Fetten, Farben und Klebstoffen gearbeitet werden. Durch den konsequenten Einsatz hochwertiger Werkstoffe wie zum Beispiel Saphir und Rubin für den Ventilsitz, respektive die Ventilkugel werden optimale chemische Verträglichkeit und Resistenz sichergestellt. Gleichzeitig wird ein Aufquellen des Ventilsitzes, wie er von Mikroventilen mit einem Sitz aus Kunststoffmaterial bekannt ist, vollständig vermieden. Die Dichttechnik mit Hartstoffpaarung (Saphir/Rubin) ermöglicht bei der Dosierung kleinste Öffnungshübe von wenigen 1/100 mm und gewährleistet aufgrund der hohen Verschleissfestigkeit dieser Materialien eine stabile Ventilgeometrie und damit eine relativ hohe Dichtigkeit und eine relativ genaue und reproduzierbare Dosiermenge für einige Millionen Öffnungs- und Schliessvorgänge, im Folgenden auch Schaltungen oder Hübe genannt. Der Ventilsitz besteht bei diesen Ventilen aus einer konischen Bohrung mit eingeschliffener Kugelzone als Dichtsitz für eine Ventilkugel, wobei die Kugelzone den selben Radius aufweist wie die verwendete Ventilkugel. Der Begriff der Kugelzone stellt hier eine geometrisch definierte Oberfläche dar, deren Flächeninhalt $A$ durch die Formel $A= 2\pi rh$ gegeben ist. Dabei wird unter $r$ der Kugelradius und unter $h$ die Höhe der aus einer Kugel geschnittenen Schicht verstanden. Die Ventilkugel wird in einem Anker gehalten, welcher angetrieben durch eine Spiralfeder die Kugel in den Ventilsitz drückt. Der Anker ist mit seinem der Kugel abgewendeten Ende in einem Spulenkörper beweglich gelagert und kann zum Öffnen des Ventils durch Anschliessen eines Stromkreises an die Spule in den Spulenkörper hinein gezogen werden. Die Ventilkugel ist im Ventil nicht geführt und bewegt sich somit frei innerhalb der konischen Bohrung. Nachteilig hat sich gezeigt, dass aufgrund der schnellen Schaltungen sowohl der Ventilsitz als auch die Ventilkugel über längere Zeit Verschleissspuren aufzeigen, die die Dichtigkeit beeinträchtigen. Ein weiteres Problem vor allem bei klebefreudigen Medien, zum Beispiel bei Medien die leicht flüchtige Lösungsmitteln und Klebepartikel umfassen oder bei Klebstoffen, stellt ein partielles Verkleben der Ventilkugel im Ventilsitz dar, das die Schaltzyklen negativ beeinflusst und eine genau Dosierung verunmöglicht.

Ein weiteres Beispiel eines Mikroventils mit Kugelverschluss zeigt DE19741816. Hier ist die Ventilkugel komplett frei und ungeführt. Die Bewegung der Kugel wird einzig durch den Ventilsitz und die seitlichen Wände der Ventilkammer begrenzt. Der Einlasskanal ist so weit, dass sich die Kugel komplett in diesen Einlasskanal hineinbewegen kann. Die Ventilkugel wird nur durch den Druck bzw. die Sogwirkung des fliessenden Mediums auf den Ventilsitz gepresst. Weiter ist in der Ventilkammer ein einzelnes oder ein ganzer Stapel an Piezoelementen aufeinander geschichtet, welche abhängig von der elektrischen Ansteuerung expandieren oder kontrahieren. In einem ersten Beispiel wird die Kugel durch eine schlagartige Expansion der Piezoelemente aus ihrem Ventilsitz heraus in den Einlasskanal geschossen und die Ventilöffnung in den Piezoelementen wird freigegeben. Eine zweite Ausführungsform benutzt die Kontraktionsfähigkeit der Piezoelemente sowie die Trägheit der Ventilkugel. Durch eine schnelle Kontraktion wird die Kugel aus dem Ventilsitz abgehoben und die Ventilöffnung freigegeben. In beiden Fällen verschliesst das Ventil passiv durch die Sogwirkung oder Strömung des Mediums, welches die Ventilkugel wieder in den Ventilsitz zurück zieht. Zur Verminderung von Abriebspuren an Kugel und Ventilsitz werden hochwertige Materialien wie Keramik, Metall oder Saphir für den Ventilsitz und Rubin für die Ventilkugel vorgeschlagen. Trotz der Wahl dieser Materialisen ist der Verschleiss am Ventilsitz und an der Ventilkugel erheblich, da die Ventilkugel völlig ungeführt ist und beim Bebrieb unkontrolliert gegen die Kanalwände und die Oberfläche des Piezostapels rund um die Ventilöffnung schlagen kann. Ein weiterer Nachteil dieser Lösung besteht darin, dass dieÖffnungszeit des Ventils nicht individuell gesteuert werden kann, sondern durch feste Parameter wie Druck und Viskosität des Mediums, Masse und Dimension der Ventilkugel, Auslenkungsvermögen der Piezoelemente und Grösse der Ventilöffnung nur grob vorgegeben werden kann.

## HINTERGRUND DER ERFINDUNG

Der Erfindung liegt die Aufgabe zu Grunde, ein Mikroventil zur Verfügung zu stellen, das die oben genannten Nachteile nicht aufweist. Insbesondere ist ein Mikroventil mit erhöhter Verschleissfestigkeit gegenüber dem Stand der Technik zu zeigen. Ausserdem sollen mit dem Mikroventil sehr schnelle Schaltungen möglich sein und eine Vielzahl, sowohl in der Viskosität als auch der chemischen Zusammensetzung und Aggressivität verschiedener Medien genau dosiert werden können.

Diese Aufgabe wird durch ein Mikroventil mit den Merkmalen des Anspruchs 1 erfüllt.

Weitere vorteilhafte Ausführungsformen des erfindungsgemässen Mikroventils ergeben sich aus den abhängigen Ansprüchen, sowie aus den Verfahrensansprüchen.

Aus der US4228821 ist ein gasdichtes Kugelventil bekannt. Dies Erfindung basiert auf der überraschenden Entdeckung, dass sehr harte Materialien wie gesinterte Keramik, Saphir, Rubin und dergleichen für die Kugel und den Ventilsitz verwendet werden können und dabei eine ausgezeichnete Gasdichtheit erreicht werden kann. Es wurde bereits erkannt, dass hohe Sorgfalt angewendet werden muss, um den Ventilsitz oder die Kugel, die aus dem sehr hartem und sprödem Material bestehen, nicht zu beschädigen, wenn die Ventilkugel auf den Ventilsitz fällt. Entsprechend dieser Erfindung hat der Ventilsitz einen gebrochenen Rand zwischen zwei ringförmigen Oberflächen, so dass diese zwischen sich einen stumpfen Winkel bilden. Die Kugel im Kugelventil gemäss der US4228821 ist frei beweglich und nicht von einem Anker gehalten. Eine Ventilsitzgeometrie wie sie in der US4228821 beschrieben ist hat zwar zur Verlängerung der Standzeit von Kugel und Ventilsitz aus hartem Material beigetragen, allerdings nur bei Ventilen bei denen die Kugel ohne zusätzliche Masse (Stössel, Anker) im Einsatz ist. Wird die Hartstoffpaarung von Ventilsitz und Ventilkugel im Betrieb mit hohen Frequenzen durch eine zusätzliche Masse in Form eines Stössels oder Ankers hoch belastet, so verschleissen die aus der US4228821 bekannten Ventile immer noch zu schnell.

Aus der JP 9068134 ist ein Verfahren zur Produktion eines Ventils mit guter Haltbarkeit und hoher Dichtigkeit, bei gleichzeitiger Gewährleistung hohe Produktivität, Genauigkeit und Qualität beschrieben. Ein Werkzeug mit kugelförmiger Welle wird gegen eine Ventilsitzoberfläche eines Ventilsitzes gepresst und beide werden gegeneinander rotiert, so dass der Ventilsitz in Abhängigkeit von der Geometrie der Welle und der Auslenkung derselben im Verhältnis zur Mittelachse gebildet wird. Die kugelförmige Form des kugelförmigen Werkzeugteils wird dabei auf die Ventilsitzoberfläche übertragen.

Es ist ein wesentliches Merkmal der Vorrichtung gemäss der vorliegenden Erfindung, dass das Mikroventil mit Ventilkugel, Ventilsitz und Düse verschiedene Bereiche, namentlich Führungsmittel, Dichtbereich und Auslassbereich, umfasst.

Es ist ein wesentliches Merkmal der Vorrichtung gemäss bevorzugter Ausführungsformen der vorliegenden Erfindung, dass der Ventilsitz den Führungsbereich, den Dichtbereich und den Auslassbereich umfasst. Jedem dieser verschiedenen Bereiche sind eine oder mehrere verschiedene Funktionen zugeordnet. Es ist zu beachten, dass vorzugsweise ein Mikroventil mit Ventilkugel mindestens im eigentlichen Ventilbereich, d.h. im Bereich der Ventilkugel und des Ventilsitzes rotationssymmetrisch ausgebildet ist. Somit handelt es sich bei den genannten Bereichen, Führungs-, Dicht- und Auslassbereich jeweils ebenfalls um rotationssymmetrische Gebilde, wobei ein eigentlicher Düsenkanal durchaus abgewinkelt und damit abweichend von der Rotationssymmetrie ausgebildet werden kann. Eine Ventilkugel wird zum Schliessen des Ventils in einen Ventilsitz gedrückt und dichtet somit zwischen Ventilkugel und Ventilsitz im Dichtbereich. Für den Fachmann ist es offensichtlich, dass die Ventilkugel nicht zwingend im geometrischen Sinn als Kugel ausgebildet sein muss. Es kann auch ein Körper mit einer nur im Ventilbereich kugelförmig ausgebildeten Form die Aufgabe erfüllen. Insbesondere sind neben einer reinen Kugel auch Formen wie Kegel oder Zylinder mit kugelförmigem Ende denkbar. Weiter könnte die Erfindung auch mit einer ellipsoidförmigen oder einer anderen konvexen rotationssymmetrischen Form ausgeführt werden, ohne dadurch von der Idee der Erfindung abzuweichen. Für das einfachere Verständnis wird im Folgenden jedoch nur noch von einer Ventilkugel gesprochen. In Fliessrichtung des zu dosierenden Mediums befindet sich vor dem Dichtbereich der Führungsbereich und hinter dem Dichtbereich als Übergang zum Düsenkanal der Auslassbereich. Nachfolgend werden die Funktionen der genannten Bereiche genauer erläutert.

Im Dichtbereich wird zusammen mit der Ventilkugel ein möglichst genauer Formschluss erzeugt. Dies ist einerseits möglich, indem für den Ventilsitz ein weiches Material verwendet wird, welches sich an die Form der Ventilkugel anpasst oder umgekehrt, indem sich die Form der Ventilkugel anpassen lässt. Diese Verformung kann je nach gewähltem Material einmalig plastisch oder aber wiederkehrend elastisch sein. In der hier beschriebenen Erfindung wird jedoch aus anderen Überlegungen von sehr harten Ventilkugel- und Ventilsitz-Materialien ausgegangen, so dass eine Verformung nicht zur Diskussion steht. Als Material für Ventilkugel und -sitz wird eine Hartstoffpaarung, vorzugsweise Rubin und Saphir, oder aber Keramik verwendet. Der Dichtbereich muss also von Anfang an sehr genau an die Form der Ventilkugel angepasst sein und bedingt eine ausserordentliche Präzision in der Herstellung. Vorzugsweise wird dieser Dichtbereich mittels einer Schleifkugel eingeschliffen, so dass ein kugelzonenförmiger Dichtbereich gebildet wird. In bevorzugten Ausführungsformen der vorliegenden Erfindung hat die Schleifkugel identische Dimensionen wie die Ventilkugel. Wie schon oben erwähnt, kann die Form der Ventilkugel von einer Kugel im geometrischen Sinne abweichen, somit müssen natürlich auch das Schleifmedium und dadurch auch der Dichtbereich diese entsprechende Abweichung besitzen.

Wie der Name schon sagt, nimmt der Führungsbereich die ungeführte oder nur lose geführte Ventilkugel beim Schliessen des Ventils sanft, das heisst unter minimaler Krafteinwirkung, im Ventilsitz auf und führt diese möglichst verschleissfrei in den Dichtbereich. Die Ventilkugel gleitet dabei an einer Seite des Führungsbereichs entlang. Unabhängig davon, ob die Ventilkugel bei offenem Ventil aus dem Bereich des Ventilsitzes herausgehoben wird oder diesen nicht verlässt, wird durch den Führungsbereich ein Einlenken in den Dichtbereich gewährleistet. Hierbei ist es vorteilhaft, dass der Führungsbereich eine Steigung in Bewegungsrichtung der Ventilkugel aufweist, so dass die Ventilkugel möglichst steil und damit schonend auf den Führungsbereich aufschlägt. Dies wird dadurch erreicht, dass ein oberer peripherer Bereich des Führungsbereiches mit grosser Steigung, das heisst mit einem grossen Führungswinkel, die Ventilkugel auffängt. Die neue vorteilhafte Geometrie des erfindungsgemässen Ventilsitzes stellt andererseits auch sicher, dass der Führungsbereich mit einem möglichst flachen Winkel in den Dichtbereich übergeht. Idealerweise ist dieser Übergang komplett flach ausgebildet, d.h. der Übergangswinkel zwischen Dichtbereich und Führungsbereich beträgt Null Grad.

Es hat sich gezeigt, dass ein Übergangswinkel von 20° zu gross ist und oft schon nach wenigen Schaltungen zu Verschleissspuren führt. Um diesen Verschleiss zu begrenzen beträgt der Übergangswinkel gemäss der vorliegenden Erfindung maximal 10°, vorzugsweise weniger als 7°, wobei - wie im Folgenden noch erläutert wird - die Verrundungsradien der Übergangswinkel eine wichtige Rolle spielen.

Der Führungswinkel bezeichnet den Winkel zwischen der Tangente im Berührungspunkt der Ventilkugel im Führungsbereich und einer gedachten Hilfsebene senkrecht zur Ventilmittelachse. In den nachfolgenden Zeichnungen ist der Führungswinkel alternativ definiert als der Winkel zwischen Ventilmittelachse und einer Line durch das Zentrum der Ventilkugel und den Berührungspunkt der Ventilkugel auf dem Führungsbereich. Der Führungswinkel ist somit abhängig vom Hub der Ventilkugel. Er beträgt gemäss bevorzugter Ausführungsformen der Erfindung minimal 25°, vorzugsweise mehr als 30°, besonders bevorzugt 45°. Diese Bedingungen können durch einen Führungsbereich in Form einer Kugelzone erfüllt werden, wobei der Radius der Kugelzone des Führungsbereichs grösser ist als derjenige des Dichtbereichs bzw. der Ventilkugel. Das Verhältnis der beiden Radien (Radius Dichtbereich : Radius Führungsbereich) beträgt vorzugsweise 1.01-1.2, besonders bevorzugt wird ein Verhältnis von 1.1.

Durch die Geometrie des Führungsbereichs wird zudem eine obere Freistellung zwischen der Ventilkugel und dem Führungsbereich definiert, welcher ein einfaches Öffnen des Ventils, d.h. ein einfaches Ablösen der Ventilkugel aus dem Dichtsitz im Dichtbereich unterstützt. Dies ist insbesondere bei klebefreudigen Medien vorteilhaft, da es die "Head Open Time" wesentlich verbessert. Unter der "Head Open Time" versteht man die Zeit, die das Ventil geschlossen sein kann bevor es zu einem Verkleben der Kugel kommt oder bevor gespült werden muss.

Ein bevorzugtes Verfahren zur Herstellung des Führungsbereiches ist das Einschleifen mittels einer Schleifkugel, welche gemäss den oben gemachten Ausführungen vorzugsweise einen grösseren Durchmesser aufweist als die Ventilkugel. Es sind auch andere Herstellungsmethoden, beispielsweise mittels Laserabtragverfahren anwendbar. Der Führungsbereich muss nicht zwingend als Kugelzone ausgebildet sein, sondern es sind auch alternative konkave Formen zulässig.

Der Auslassbereich wird vorzugsweise durch einen Konus gebildet, der sich in Fliessrichtung des zu dosierenden Mediums vom benötigten Durchmesser des Ventilsitzes auf den Durchmesser des Düsenkanals verjüngt. Der Konus des Auslassbereichs schliesst direkt an den Dichtbereich an und bildet den Übergang vom Dichtbereich zum Düsenkanal. Er soll einen möglichst grossen Freistellwinkel zum Dichtbereich bilden. Ein grosser Freistellwinkel begünstigt den Fluss des zu dosierenden Mediums und erhöht wiederum die "Head Open Time" indem er verhindert, dass die Ventilkugel insbesondere bei klebefreudigen Medien im Dichtbereich verklebt. Der Freistellwinkel beträgt mindestens 10°, vorzugsweise > 15°, besonders bevorzugt 20°.

Gemäss einer Ausführungsform der vorliegenden Erfindung wird der Auslassbereich direkt durch den Düsenkanal gebildet. Es ist jedoch zu beachten, dass das Volumen im Düsenkanal und in der unteren Freistellung hinter der Ventilkugel bei geschlossenem Ventil klein zu halten ist, damit ein Austrocknen oder Altern des zu dosierenden Mediums verhindert wird. Düse und Ventilsitz können sich aus mehreren Teilen zusammensetzen oder einstückig als eine Einheit ausgebildet sein.

Gemäss einer weiteren Ausführungsform wird eine weitere Verringerung des Verschleisses an Ventilsitz und Ventilkugel erreicht indem die Übergänge zwischen den einzelnen Zonen verrundet werden. So beträgt der Radius im Übergang zwischen Führungsbereich und Sitzstirnfläche vorzugsweise 0.02 bis 0.1 mm, besonders bevorzugt wird ein Radius von 0.03 bis 0.06 mm. Die Radien im Übergang zwischen Führungsbereich und Dichtbereich, bzw. zwischen Dichtbereich und Auslassbereich sind vorzugsweise etwas kleiner und betragen 0.01 bis 0.06 mm.

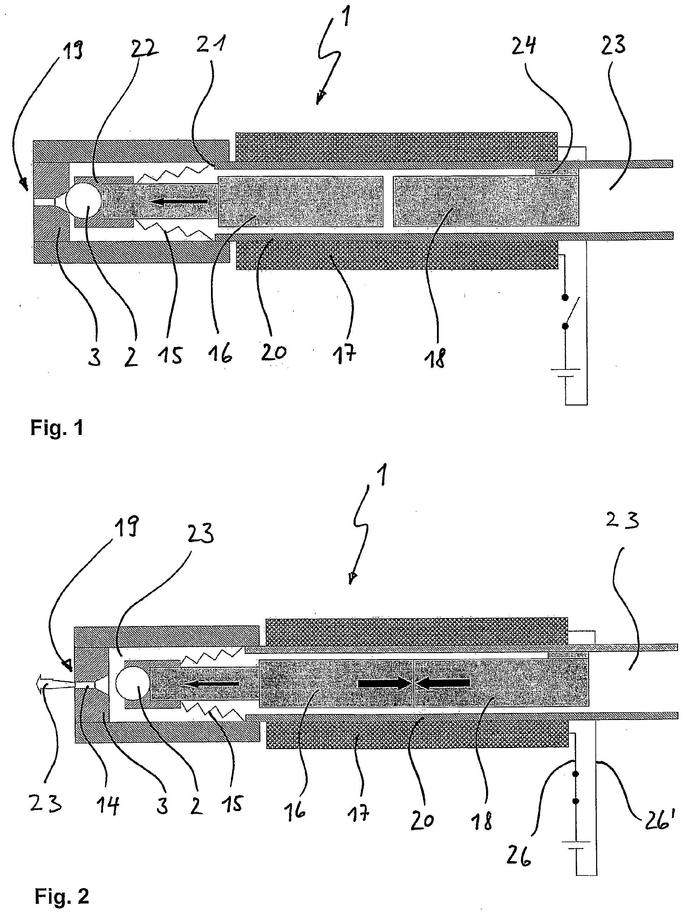

Bei den erfindungsgemässen Ventilen ist die Ventilkugel vorzugsweise wie in der Figur 2 dargestellt, an einem unteren Ende eines mobilen Ankers gehalten, welcher die Ventilkugel mit einer Kraft einer Spiralfeder beaufschlagt und in den Ventilsitz drückt. Der mobile Anker ist mit seinem oberen, der Ventilkugel abgewendeten Ende, in einem Spulenkörper beweglich gelagert und kann zum Öffnen des Ventils durch Anschliessen eines Stromkreises an die Spule in den Spulenkörper hinein gegen einen stationären Anker gezogen werden.

Gemäss einer ersten Gruppe von nicht anspruchsgemässen Ausführungsformen ist der mobile Anker im Ventil nicht weiter geführt. Die Führung des mobilen Ankers übernimmt der Führungsbereich im Zusammenwirken mit der Ventilkugel. Diese kann bei geöffnetem Ventil innerhalb des Führungsbereichs frei ausgelenkt werden. Wird ein genügend grosser Hub zugelassen, kann sich die Ventilkugel sogar ganz aus dem Bereich des Ventilsitzes hinausbewegen.

Die Anwendungsmöglichkeiten der erfindungsgemässen Ventile umfassen industrielle Tintenstrahldrucker, Drucker für Brailleschrift, die Chemische Analysentechnik (Laborautomation, Life Science), Anlagen zum High-Troughput-Screening, Mikro- und Nano-Dosiertechnik. Es kann dabei mit niedrigviskosen Medien wie Wasser, wässrigen Lösungen, Tinten auf der Basis von Wasser, organischen und oder anorganischen Lösungsmitteln wie N-Propanol, Dimethylsulfoxid (DMSO), Methyl-Ethyl-Keton (MEK) und andere Lösungsmittel, sowie speziell auch mit hochviskosen Medien wie Ölen, Fetten, Farben, Detergenzien und Klebstoffen oder sogar Gasen gearbeitet werden. Durch den konsequenten Einsatz hochwertiger Werkstoffe wie zum Beispiel Saphir, Keramik und Rubin für den Ventilsitz, respektive die Ventilkugel sowie Edelstahl für die weiteren Bestandteile des Mikroventils werden optimale chemische Verträglichkeit und Resistenz sichergestellt. Gleichzeitig wird ein Aufquellen des Ventilsitzes, wie er von Mikroventilen mit einem Sitz aus Kunststoffmaterial bekannt ist, vollständig vermieden. Die Dichttechnik mit Hartstoffpaarung, vorzugsweise Saphir/Rubin ermöglicht bei der Dosierung kleinste Öffnungshübe von wenigen 1/100 mm und gewährleistet aufgrund der hohen Verschleissfestigkeit dieser Materialien und der speziellen Gestaltung des Ventilsitzes eine stabile Ventilgeometrie und damit eine hohe Dichtigkeit und eine genaue und reproduzierbare Dosiermenge für bis zu einige Milliarden Öffnungs- und Schliessvorgänge, im Folgenden auch Schaltungen oder Hübe genannt. In Kombination mit kürzester Ansprechzeit des Ventils führt dies zu hervorragender Dynamik und Wiederholgenauigkeit bei der Dosierung. Die Geometrie der Ventildüse ist so gestaltet, dass eine optimale Tropfenformung für berührungslose Dosierung direkt ab der Düse erreicht wird. Eine weitere Optimierung der Qualität der Dosierung kann durch den Einsatz eines Filtrationselementes in einem Einlassbereich des Ventils erreicht werden.

Die neuen Ventiltypen ermöglichen ein hohes Mass an Modularität. Neben Mikroventilen, die kompakt aus einer Spule und dem eigentlichen Ventil bestehen, und damit eine enge Rastermöglichkeit von zum Beispiel 4 mm bieten, welche besonders im Ink-Jet Bereich vorteilhaft ist, werden auch Ventile vorgeschlagen, bei denen die Spule vom eigentlichen Ventil getrennt ist, so dass der Einsatz eines Spulenpakets ermöglicht ist. Mit einer Rastermöglichkeit von zum Beispiel 4 mm sind diese Ventile immer noch sehr kompakt.

Für die Dosierung von hochviskosen Medien werden Mikroventile mir höherem Durchlass, d.h. mit grösserem Volumen an Mediendurchlass, eingesetzt.

Je nach Ventiltyp variiert die maximale Schnelligkeit der Schaltungen von 1000 Hz bis 5000 Hz, bevorzugt bis zu 3000 Hz.

Die erfindungsgemässen Mikroventile werden elektromagnetisch betrieben, und vom Dosiermedium direkt durchströmt. Im stromlosen Zustand schliesst das Ventil. Die Schliesskugel oder Ventilkugel am mobilen Anker wird dabei wie oben bereits beschrieben durch die zugehörige Feder gegen den Ventilsitz gedrückt. Das Ventil öffnet bei Bestromung der Ventilspule, weil es infolge des erzeugten Magnetfeldes zur gegenseitigen Anziehung der beiden Anker kommt. Die während eines Öffnungszyklus dosierte Flüssigkeitsmenge bestimmt sich in Abhängigkeit vom Überdruck des Fördermediums und aus der Dauer des angelegten Spannungspulses, wobei der Überdruck des Mediums bis zu 70 bar beträgt, vorzugsweise unter 10 bar. Die verwendete Legierung für die Anker ist speziell ausgewählt, um eine hohe chemische Beständigkeit sowie kürzeste Ansprechzeiten des Ventils zu erreichen. Vorzugsweise wird der Anker Diamantbeschichtet oder mit einer anderen geeigneten Beschichtung versehen. Diese Eigenschaften sind sehr wichtig beim Einsatz in industriellen Tintenstrahldruckern oder "high throughput"-Analysesystemen.

Für beste Leistung bei höchsten Frequenzen erfolgt die Ansteuerung vorzugsweise durch Speisung mit einem gestuften Spannungspuls (Peak and Hold). Die gepulste Spannung kann mittels Chopper erzeugt werden. Dabei wird mit einem kurzen, erhöhten Spannungspuls (z.B. $U_P$ =12$V$ oder $Up$ = 24$V$) eine schnelle und definierte Öffnung des Ventils erreicht. Ist das Ventil einmal geöffnet genügt eine tiefere Haltespannung ($U_H$ = 2-3$V$) für den Rest der Öffnungszeit. Mit dieser Art der Ansteuerung werden kürzeste Ansprechzeiten der Ventile bei gleichzeitig geringer Wärmeentwicklung erreicht. Da die Spule eine induktive Last darstellt, wird der Verlauf der Steuerspannung in der Realität verzerrt und muss von der Steuerelektronik durch geeignete Massnahmen kompensiert werden, um negative Einflüsse, vor allem bei hohen Frequenzen oder wenn exakte Schliesszeiten (Dosiertechnik) benötig werden, zu verringern.

An der Austrittszone ist eine Abrisskante, das heisst ein Übergang vom Düsenkanal zu einer äusseren Stirnfläche, möglichst scharfkantig ausgebildet, um einen guten Tropfenabriss zu ermöglichen. Vorzugsweise liegt der Radius der Abrisskante bei 0.003 mm. Auf bekannte Weise sind die Benetzungseigenschaften der äusseren Stirnfläche des Ventilsitzes und/oder der Düse, insbesondere Material und Oberflächengüte, so gewählt, dass sie eine Benetzung und eine allfällig daraus resultierende Verklebung möglichst verhindern. Saphir hat sich hierzu als gut geeignetes Material erwiesen. Es hat sich zudem als vorteilhaft erwiesen möglichst wenig Benetzungsfläche zu bieten.

Um kleinste Dosiermengen erreichen zu können, ist es vorteilhaft den Durchmesser des Düsenkanals auf unter 0.15 mm zu reduzieren. Da die Fertigung von Ventilsitzen aus Saphir oder Keramik mit solchen feinen Kanälen sehr schwierig ist, werden gemäss weiterer Ausführungsformen der Erfindung Vorsatzblenden zur Restriktion des Fluidstrahls eingesetzt.

Der Aufbau der Ventil-Frontpartie mit einer zusätzlichen Blende kann die Dosierung von Kleinstmengen bei gewissen Anwendungen begünstigen. Je nach Medium und Dosierparametern sind gegenüber den vorgängig beschriebenen Konstruktionen nochmals Reduktionen der Dosiermengen von 20-70% möglich. Um solch kleinste Tropfengrössen zu erreichen, wird der Durchmesser einer Durchgangsöffnung in der Vorsatzblende gegenüber dem, vorzugsweise koaxial angeordneten, Düsenkanal stark verengt. Diese Verengung des funktionellen Querschnitts des Fluidkanals wird durch den Einsatz der Blende erreicht, wobei die Produktionsschwierigkeiten, welche sich beim Anbringen einer solch feinen Bohrungen im Düsenstein unweigerlich eingestellt hätten, vermieden werden können.

Da die Verengung im Fluidkanal erst kurz vor dem Austrittpunkts erfolgt, ist die Restriktion auf ein Mindestmass beschränkt. Der Blendeneinsatz eignet sich daher in entsprechend skalierter Bauweise sowohl für nieder- wie auch für hochviskose Medien.

Um die gewünschten Effekte zu erzielen, müssen der Durchmesser der Durchgangsöffnung in der vorzugsweise scheibenförmigen Blende und die Dicke der Blende, sowie der Durchmesser und die Länge des Düsenkanals aufeinander abgestimmt sein. Im Gegensatz zu den vorgenannten Werten kann bei Ausführungsformen mit Vorsatzblende die Kanallänge, in Abhängigkeit von der Viskosität des zu dosierenden Mediums, kürzer gewählt werden. Der Durchmesser der Durchgangsöffnung in der Blende beträgt vorzugsweise 30-50% des Durchmessers des Düsenkanals. Das Verhältnis von Länge der Durchgangsöffnung zu deren Durchmesser beträgt vorzugsweise von 1:1 bis 5:1.

Die Blende kann aus verschiedenen Materialien, wie zum Beispiel Keramiken wie $ZrO_2$, Hartmetall oder Kunststoff hergestellt werden. In Abhängigkeit der gewählten Materialien erfolgt die Befestigung der Blende am Ventilsitz vorzugsweise durch Kleben oder Löten oder durch mechanische Halterungen.

Bei letztgenannter wird die die Blende gemäss einer Ausführungsform mit einer Überwurfhülse, welche aussen über das Ventilgehäuse gesteckt ist, gegen den Ventilsitz gezogen. Ein Vorteil dieser Befestigungsform besteht darin, dass auf die direkte Befestigung der Blende am Ventilsitz verzichtet werden kann. Für manche Anwendungen ist der Einsatz einer Überwurfhülse nachteilig, da der Düsenaustritt ist nicht mehr frontbündig ist.

Es hat sich gezeigt, dass eine sehr gute koaxiale Positionierung von Vorsatzblende und Ventilsitz durch das Einbringen beider in den Aufnahmebereich des Führungselements erreicht wird. Zur perfekten Funktion dieser Mikroventile ist das Einhalten genauer Koaxialitätstoleranzen der Bohrungen/Öffnungen in der Blende und im Ventilsitz zum jeweiligen Aussendurchmesser nötig. Die koaxial korrekte Ausrichtung der Aussendurchmesser der beiden Teile zueinander lässt sich wiederum vorzugsweise über das Führungselement sicherstellen, das die beiden Teile spielfrei am Aussendurchmesser hält.

Gemäss einer bevorzugten Ausführungsform ist die Durchgangsöffnung in der Blende mit einer Fase an der, dem Ventilsitz zugewandten, Seite versehen. Die Fase dient der verbesserten Fluideinleitung in die Verengung. Der Fasen-Konuswinkel liegt vorzugsweise zwischen 60 und 90°. Die oben genannten bevorzugten Werte für die Länge und den Durchmesser der zylindrischen Blenden-Durchgangsöffnung werden vorzugsweise auch bei den Ausführungsformen mit Fase beibehalten. Die Stärke der Blende wird demgemäss um den von der Fase eingenommenen Bereich vergrössert. Der Hauptvorteil einer gefasten Blendenöffnung liegt in den besseren Strömungseigenschaften. Der Hauptnachteil liegt darin, dass die Blende mit der Fase aufwändiger herzustellen ist.

Werden lichtempfindliche und/oder lichthärtende Medien dosiert, so sind Ventilsitz und/oder Düse und/oder die Vorsatzblende vorteilhafter Weise aus lichtundurchlässigem Material gefertigt, oder lichtundurchlässig gemacht.

## KURZBESCHREIBUNG DER FIGUREN

Anhand von Figuren, welche lediglich Ausführungsbeispiele darstellen, wird die Erfindung im Folgenden erläutert. Es zeigen

**Fig. 1**  ein Mikroventil in geschlossenem Zustand in einem Längsschnitt entlang der Ventilmittelachse;

**Fig. 2**  das Mikroventil aus Figur 1 im geöffneten Zustand;

**Fig. 3a**  eine stark vergrösserte Darstellung eines Ventilsitzes eines geschlossenen Mikroventils gemäss einer ersten Ausführungsform der Erfindung im Längsschnitt entlang der Ventilmittelachse mit einer teilweise skizzierten Ventilkugel, wobei alle weiteren Anteile des Ventils insbesondere des mobilen Ankers nicht dargestellt sind;

**Fig. 3b**  ein Ventilsitz gemäss Figur 3a, wobei die Ventilkugel weggelassen ist;

**Fig. 3c**  eine stark vergrösserte Darstellung eines Ventilsitzes eines offenen Mikroventils gemäss einer ersten Ausführungsform der Erfindung im Längsschnitt entlang der Ventilmittelachse mit einer teilweise skizzierten Ventilkugel, wobei alle weiteren Anteile des Ventils insbesondere des mobilen Ankers nicht dargestellt sind, besonders hervorgehoben ist der Führungswinkel;

**Fig. 3d**  eine bevorzugte Ausführungsform eines Ventilsitzes, wobei die Radien im Übergang der einzelnen Bereiche hervorgehoben sind;

**Fig. 4**  einen typischen Spannungsverlauf zur Ansteuerung eines erfindungsgemässen Mikroventils;

| | |
|---|---|
| **Fig. 5a** | eine vergrösserte Darstellung einer Ventilkugel in einem Ventilsitz gemäss einer weiteren Ausführungsform der Erfindung mit grossem Auslassbereich und grossem Führungsbereich, bei geschlossenem Ventil; |
| **Fig. 5b** | eine Darstellung der Ventilkugel im Ventilsitz gemäss Figur 5a bei offenem Ventil; |
| **Fig. 6a** | eine vergrösserte Darstellung einer Ventilkugel in einem Ventilsitz gemäss einer weiteren Ausführungsform mit kleinem Auslassbereich und grossem Führungsbereich, bei geschlossenem Ventil; |
| **Fig. 6b** | eine Darstellung der Ventilkugel im Ventilsitz gemäss Figur 6a bei offenem Ventil; |
| **Fig. 7a** | eine vergrösserte Darstellung einer Ventilkugel in einem Ventilsitz gemäss einer nicht anspruchsgemässen Ausführungsform mit grossem Auslassbereich und kleinem Führungsbereich, bei geschlossenem Ventil; |
| **Fig. 7b** | eine Darstellung der Ventilkugel im Ventilsitz gemäss Figur 7a bei offenem Ventil; |
| **Fig. 8** | eine perspektivische Ansicht eines teilweise geschnittenen unteren Frontbereiches eines Mikroventils gemäss dem Stand der Technik mit einem zweiteiligen Ventilgehäuse, wobei ein Element zur Führung des Ankers strichliniert dargestellt ist; |
| **Fig. 9a bis Fig. 9d** | jeweils eine perspektivische Ansicht eines teilweise geschnittenen unteren Frontbereiches eines Mikroventils gemäss jeweils einer nicht anspruchsgemässen Ausführungsform der Erfindung, wobei verschiedene Versionen zur Befestigung und Abdichtung der Ventilsitze im Gehäuse gezeigt sind; |
| **Fig. 10a** | eine perspektivische Ansicht eines teilweise geschnittenen unteren Frontbereiches eines Mikroventils gemäss einer weiteren Ausführungsform der Erfindung mit einem einstückigen Führungselement, wobei der Ventilsitz nicht dargestellt ist; |
| **Fig. 10b** | einen Querschnitt durch eine Führungszone des Frontbereichs gemäss Fig. 10a; |
| **Fig. 11a** | eine schematisierte Querschnittsansicht eines ungeführten mobilen Ankers in einem geöffneten Ventil zur Verdeutlichung der Relativposition zum Ventilsitz; |
| **Fig. 11b** | eine schematisierte Ansicht des ungeführten Ventils gemäss Fig. 11a entlang A-A im Längsschnitt zur Verdeutlichung der Auslenkung des mobilen Ankers mit der Ventilkugel gegenüber der Ventil-Längsachse; |
| **Fig. 11c** | eine schematisierte Querschnittsansicht eines geführten mobilen Ankers gemäss einer Ausführungsform der Erfindung in einem geöffneten Ventil zur Verdeutlichung der Relativposition zum Ventilsitz; |
| **Fig. 11d** | eine schematisierte Ansicht des geführten Ventils gemäss Fig. 11c entlang A-A im Längsschnitt zur Verdeutlichung der Auslenkung des mobilen Ankers mit der Ventilkugel gegenüber der Ventil-Längsachse; |
| **Fig. 12a** | eine perspektivische Ansicht eines teilweise geschnittenen Führungselements gemäss einer Ausführungsform der Erfindung; |
| **Fig. 12b** | einen Querschnitt durch eine Führungszone des Führungselements gemäss Fig. 12a in einem Mikroventil; |
| **Fig. 12c** | einen Frontbereich eines Mikroventils gemäss der Fig. 12b im Längsschnitt; |
| **Fig. 12d** | eine perspektivische Ansicht eines teilweise geschnittenen unteren Frontbereiches eines Mikroventilsgemäss Fig. 12b und 12c, wobei der mobile Anker nicht dargestellt ist und die Sicht auf |

den Ventilsitz freigegeben ist;

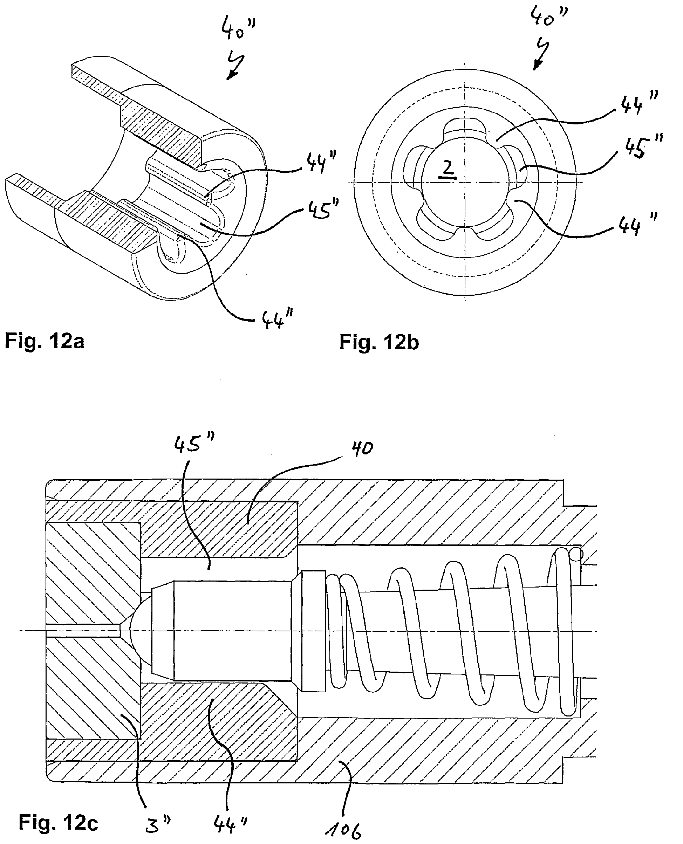

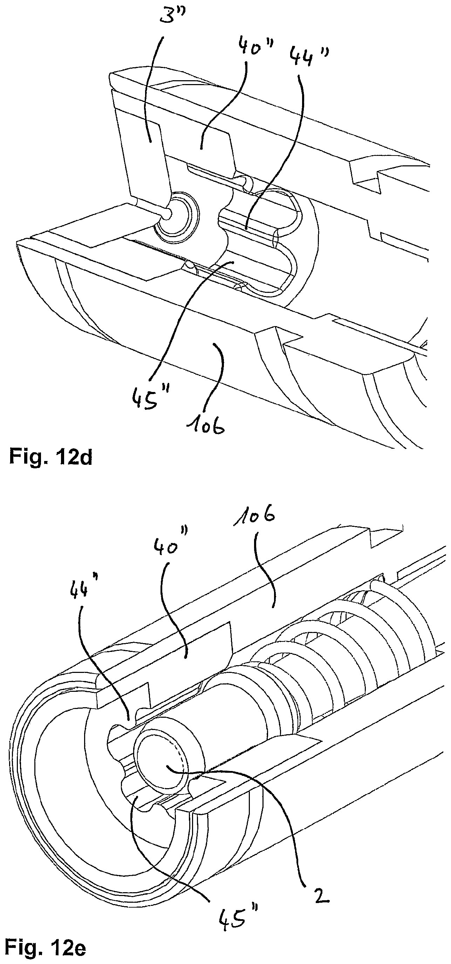

Fig. 12e eine perspektivische Ansicht eines teilweise geschnittenen unteren Frontbereiches eines Mikroventilsgemäss Fig. 12b und 12c, in einer Sicht von schräg unten auf die Ventilfront, wobei der Ventilsitz nicht dargestellt und die Sicht auf das Führungselement freigegeben ist;

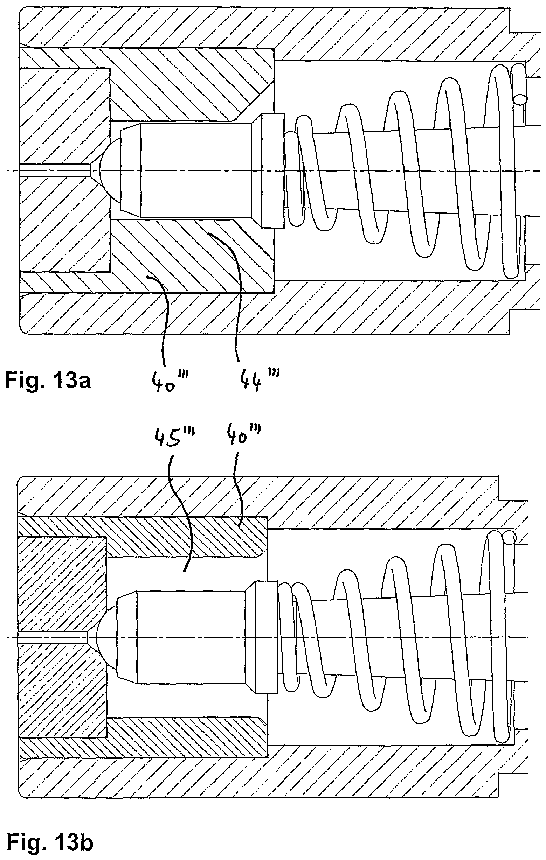

Fig. 13a einen Frontbereich einer weiteren Ausführungsform der erfindungsgemässen Mikroventile im Längsschnitt, wobei die Schnittebene durch die Führungsstege verläuft und der mobile Anker mit Schliesskugel, Führungshülse und Feder nicht im Schnitt dargestellt sind;

Fig. 13b einen Längsschnitt durch den Frontbereich gemäss Fig. 13a, wobei die Schnittebene durch die Fluidkanäle verläuft;

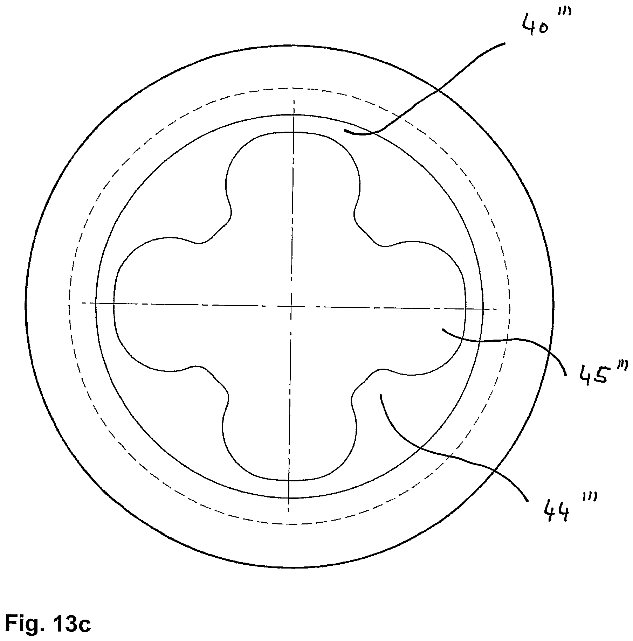

Fig. 13c einen Querschnitt durch eine Führungszone des Führungselements gemäss Fig. 13a und 13b;

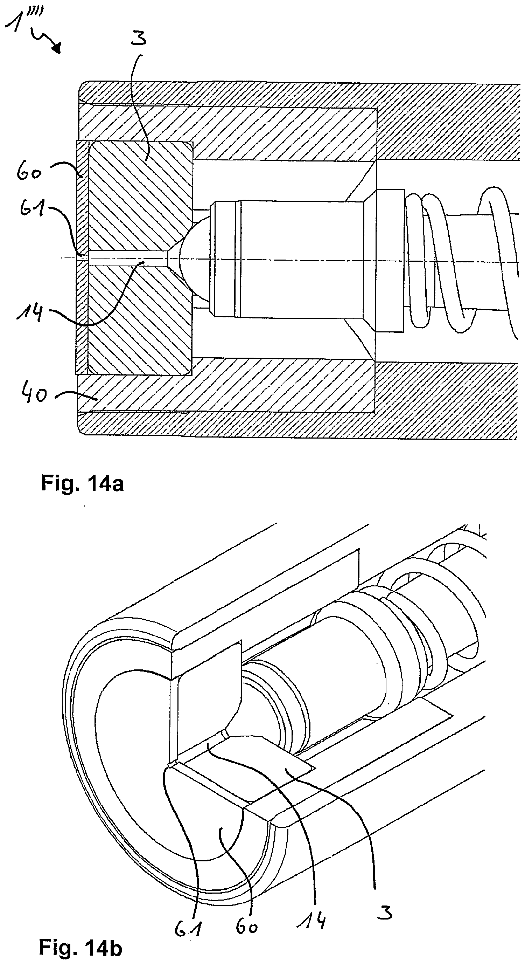

Fig. 14a einen Längsschnitt durch einen Frontbereich einer weiteren Ausführungsform der erfindungsgemässen Mikroventile mit einer Vorsatzblende für die Dosierung von Kleinstmengen, wobei die Schnittebene entlang der Mittelachse verläuft;

Fig. 14b eine perspektivische Ansicht eines teilweise geschnittenen unteren Frontbereiches eines Mikroventils gemäss einer weiteren Ausführungsform der Erfindung mit einer Vorsatzblende gemäss Fig. 14a;

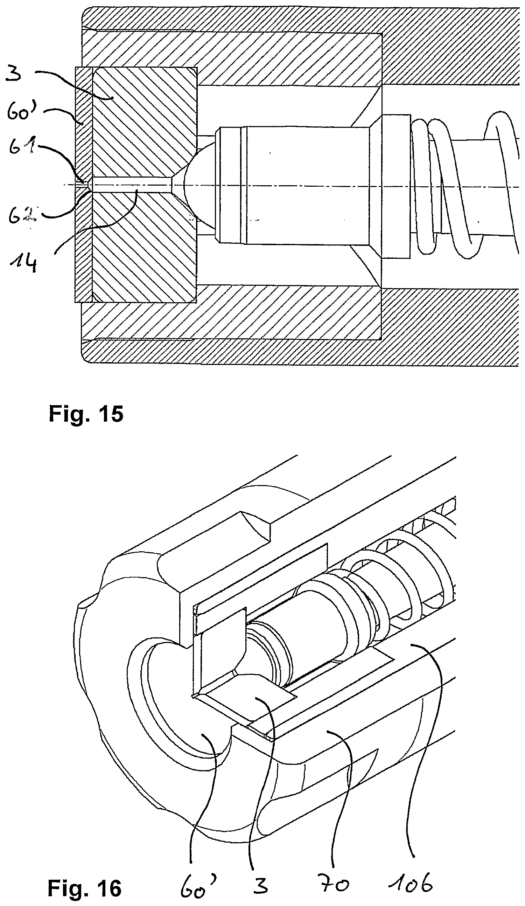

Fig. 15 einen Längsschnitt durch einen Frontbereich eines Mikroventils mit einer Vorsatzblende gemäss einer weiteren Ausführungsform; und

Fig. 16 eine perspektivische Ansicht eines teilweise geschnittenen unteren Frontbereiches eines Mikroventils gemäss einer weiteren Ausführungsform der Erfindung mit einer Vorsatzblende, welche von einer Überwurfhülse gehalten wird.

## DETAILLIERTE BESCHREIBUNG BEVORZUGTER AUSFÜHRUNGSFORMEN

In der **Figur 1** ist eine erste Ausführungsform des erfindungsgemässen Mikroventils 1 im geschlossenen Zustand dargestellt. Das gezeigte Mikroventil 1 umfasst eine Düse 19 mit einen Ventilsitz 3, einen mobilen Anker 16 mit einer Ventilkugel 2 und einen Ventilkörper 20 mit einer Spule 17 und einen stationären Anker 18. Der mobile Anker 16 wird im Ruhezustand zusammen mit der am mobilen Anker 16 angebrachten Ventilkugel 2 in eine Schliessstellung gepresst. Hierzu dient die Schliessfeder 15, welche einerseits an einem Absatz 21 im Ventilkörper und andererseits an der Aufnahme 22 der Ventilkugel angreift. Die Ventilkugel 2, welche vom mobilen Anker 16 gehalten wird, sitzt dabei im Ventilsitz 3 und verschliesst somit die Düse 19. Der stationäre Anker 18 sitzt etwa hälftig im Bereich der Spule 17 und wird in dieser Position im Ventilkörper 20 mittels einer Fixierung 24 festgehalten. Sowohl der mobile als auch der stationäre Anker 16 und 18 sind in ihrem Querschnitt vorzugsweise nicht rund sondern haben eine profilierte Struktur, so dass das zu dosierende Medium 23 die beiden Anker 16, 18 umfliesst. Das zu dosierende Medium 23 wird zum Beispiel mittels einer nicht weiter dargestellten Zuführleitung auf bekannte Weise dem Ventil 1 zugebracht. Ein nicht in der Figur dargestelltes optionales Filtrationselement im Einlassbereich des Ventils mit einer beispielhaften Porengrösse <17$\mu$m stellt eine zusätzliche Sicherheitsmassnahme in Bezug auf Dichtigkeit, Verstopfung des Ventils und Dosiergenauigkeit dar.

Der Ventilsitz 3 ist im dargestellten Ausführungsbeispiel aus Saphir gefertigt, die Ventilkugel 2 aus Rubin und der Ventilkörper 20 sowie die beiden Anker 16 und 18 aus Edelstahl.

**Figur 2** zeigt nun das Mikroventil 1 aus der Figur 1 in seinem geöffneten Zustand. Dieser Zustand wird erreicht, indem der mobile Anker 16 elektromagnetisch durch Anlegen einer Spannung an die Spule 17 zum stationären Anker 18 hin bewegt wird. Die Spannung wird via elektrischer Zuleitungen 26, 26' von einer geeigneten Steuerelektronik zugeführt. Durch die Bewegung des mobilen Ankers 16 wird die Ventilkugel 2 entgegen der Federkraft der Schliessfeder 15 aus ihrem Ventilsitz 3 gehoben und gibt somit den Düsenkanal 14 für das zu dosierende Medium 23 frei. Das Medium 23, welches unter Überdruck steht, der wie bei anderen Ausführungsformen vorzugsweise 0-70 bar, besonders bevorzugt 0.3-1.5 bar beträgt, kann nun aus der Zuführleitung 25 durch den Ventilkörper 20 hindurch die beiden Anker 16, 18 sowie die Ventilkugel 2 umströmen und durch den Düsenkanal 14 aus der Düse 19 und somit aus dem Mikroventil 1 abgegeben werden.

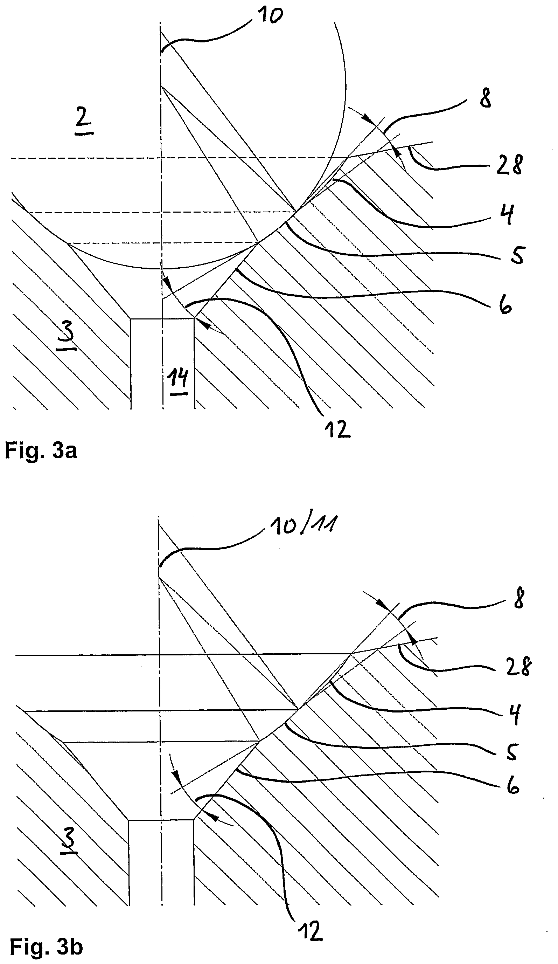

Die verschiedenen Bereiche des Ventilsitzes 3, sowie das Zusammenspiel zwischen Ventilsitz 3 und Ventilkugel 2 sind in den **Figuren 3a bis 3d** stark vergrössert im teilweisen Querschnitt dargestellt. Der Ventilsitz 3 besteht aus drei unterschiedlichen Bereichen, namentlich dem Führungsbereich 4, dem Dichtbereich 5 und dem Auslassbereich 6. Der Dichtbereich 5 ist dadurch bestimmt, dass in diesem Bereich die Ventilkugel 2 eine formschlüssige dichte Verbindung mit dem Ventilsitz 3 herstellt. Der Dichtbereich 5 ist in diesem Beispiel passgenau an die Form der Ventilkugel 2 angepasst. In bevorzugten Ausgestaltungen hat der Dichtbereich 5 die Form einer Kugelzone deren Durchmesser mit dem der Ventilkugel übereinstimmt.

Dem Fachmann ist klar, dass sowohl der Dichtbereich 5 als auch die Ventilkugel 2 von der Kugelform abweichen können ohne die Idee der Erfindung zu verlassen. Diese Abweichungen sind jedoch idealerweise sowohl in der Ventilkugel 2 als auch im Dichtbereich 5 identisch, so dass sich weiterhin eine formschlüssige Dichtverbindung ergibt. Weiter denkbar ist, dass die Kugelzone des Dichtbereichs 5 einen grösseren Durchmesser als die Ventilkugel 2 aufweist, womit sich der Dichtbereich 5 auf eine umlaufende geschlossene Linie, welche durch die Berührungspunkte der Ventilkugel 2 im Ventilsitz 3 bzw. im Führungsbereich 4 gebildet wird, reduziert.

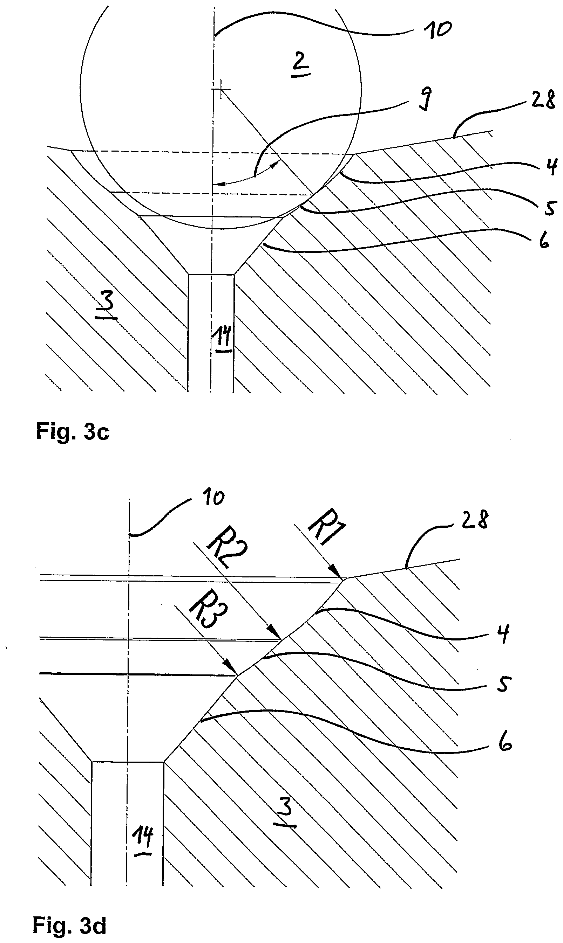

Der Führungsbereich 4 bezeichnet den Bereich des Ventilsitzes 3, welcher in Fliessrichtung des Mediums 23 vor dem Dichtbereich 5 liegt. Der Führungsbereich 4 schliesst mit einem Übergangswinkel 8 an den Dichtbereich 5 an und ist vorzugsweise ebenfalls in Form einer Kugelzone ausgebildet. Der Radius der Kugelzone des Führungsbereichs 4 ist vorzugsweise grösser als der Radius der Kugelzone der Ventilkugel 2. Das Verhältnis dieser beiden Radien liegt im dargestellten Beispiel bei 1.1. Der Übergangswinkel 8 zwischen Dichtbereich 5 und Führungsbereich 4 ist klein zu halten, damit beim Übergang der Ventilkugel 2 zwischen diesen beiden Bereichen die Ventilkugel 2 keinem unnötigen Verschleiss ausgesetzt ist. Der Übergangswinkel beträgt im Ausführungsbeispiel zwischen 2° und 4°. Die Steigung des Führungsbereichs 4 im Berührungspunkt der Ventilkugel 2 mit dem Führungsbereich 4 bzw. der Winkel zwischen der Tangente durch den Berührungspunkt der Ventilkugel 2 mit dem Führungsbereich 4 und einer Hilfsebene 11 senkrecht zur Ventilmittelachse 10, der so genannten Führungswinkel, ist von weiterem Interesse. Der Führungswinkel 9 kann alternativ wie in Figur 3c dargestellt auch definiert werden als derjenige Winkel, der sich zwischen der Ventilmittelachse 10 und einer gedachten Linie zwischen Ventilkugelzentrum und Berührungspunkt der Ventilkugel 2 auf dem Führungsbereich 4 ergibt. Dieser Führungswinkel 9 stellt - wie bereits erläutert - sicher, dass die Ventilkugel 2 welche aus dem Ventilsitz 3 abgehoben ist, beim Schliessen des Mikroventils möglichst schonend aufgefangen wird und die zwischen Ventilkugel 2 und Aufschlagpunkt oder Berührungspunkt auf dem Ventilsitz 3 entstehenden Kräfte möglichst klein bleiben, damit Ventilkugel 2 und Ventilsitz 3 möglichst wenig beansprucht und nicht beschädigt werden. Dieser Führungswinkel 9 ist abhängig vom Hub der Ventilkugel 2. Er beträgt minimal 25°, vorzugsweise mehr als 30°. Die dem beweglichen Anker mit der Ventilkugel 2 zugewandte Sitzstirnfläche 28 kann in einer Ebene senkrecht zur Ventilmittelachse 10 liegen oder aber eine Konusform, wie in den Figuren 3a bis 3d dargestellt, aufweisen.

Der Ventilsitz 2 wird vorteilhaft hergestellt, indem in einem ersten Schritt die Bohrung für den Düsenkanal 14 und ein Konus eingebracht wird. Ein innerster Anteil dieses Konus verbleibt im fertigen Mikroventil als Auslassbereich 6. Koaxial zu diesem Konus wird in einem zweiten Schritt mittels einer Schleifkugel der Führungsbereich 4 eingeschliffen. Als letzter Schritt wird ebenfalls koaxial mittels einer zweiten Schleifkugel der Dichtbereich 5 eingeschliffen.

Andere alternative Herstellungsverfahren der Ventilsitze gemäss der vorliegenden Erfindung insbesondere für die Erstellung der Führungsbereiche umfassen zum Beispiel Laserabtragverfahren.

Im Ventil gemäss Figuren 3a bis 3d folgt auf der dem Führungsbereich 4 gegenüberliegenden Seite des Dichtungsbereiches 5 der Auslassbereich 6. Der Auslassbereich 6 wird durch einen Konus gebildet, der den Düsenkanal 14 auf die benötigte Grösse des Ventilsitzes 3 aufweitet, direkt an den Dichtbereich 5 anschliesst und den Übergang vom Dichtbereich 5 zum Düsenkanal 14 bildet. Er soll einen möglichst grossen Freistellwinkel 12 zum Dichtbereich 5 bilden. Ein grosser Freistellwinkel 12 begünstigt den Fluss des zu dosierenden Mediums 23 und verhindert, dass die Ventilkugel 2 insbesondere bei klebefreudigen Medien 23 im Dichtbereich 5 verklebt. Der Freistellwinkel 12 beträgt im dargestellten Beispiel 15°.

Eine bevorzugte Ausführungsform eines Mikroventils 1 hat abgerundete Übergängen zwischen den verschiedenen Bereichen des Ventilsitzes 3. Figur 3d zeigt diese Radien, Radius R1 im Übergang zwischen Sitzstirnfläche 28 und Führungsbereich 4, Radius R2 im Übergang zwischen Führungsbereich 4 und Dichtbereich 5 und Radius R3 im Übergang von Dichtbereich 5 zu Auslassbereich 6. Insbesondere Radius R2 zwischen Führungsbereich 4 und Dichtbereich 5 verringert nochmals den Verschleiss der Ventilkugel 2 beim Verschliessen des Ventils. Die verschleissmindernde Verrundung der Übergangszonen ist in der Figur 3d angedeutet. Die Radiusgrösse wird herstellungstechnisch primär bei R1 definiert, wobei sie minimal R=0.02mm, maximal R=0.1 mm, und bevorzugt R=0.03 bis 0.06 mm beträgt. Die Radien R2 und R3 sind unter Verwendung von bekannten Fertigungstechniken (Bürsten, Trowalisieren) automatisch mitbetroffen, fallen jedoch kleiner aus, da diese Zonen weniger Angriffskante bieten für die Verrundung.

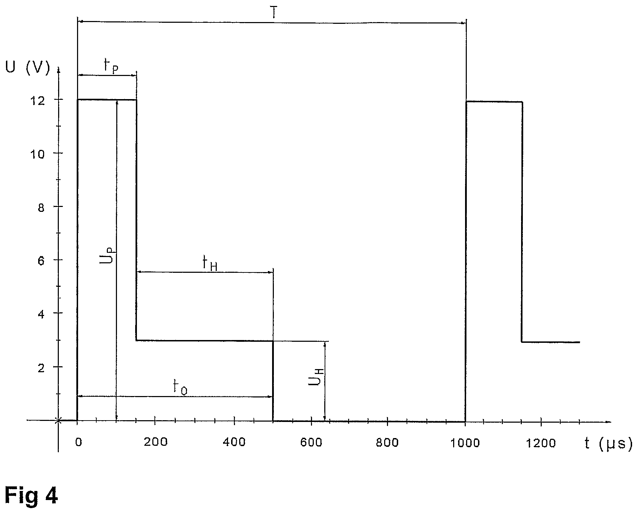

**Figur 4** zeigt einen typischen Verlauf der Ansteuerung für eine kontinuierlich wiederholende Dosierung mit 1 kHz und einer Ventilöffnungszeit von 500 $\mu$s. Dargestellt ist der Verlauf bei idealer ohmscher Last. Für beste Leistung bei höchsten Frequenzen erfolgt die Ansteuerung vorzugsweise durch Speisung mit einem gestuften Spannungspuls (Peak and Hold). Dabei wird mit einem kurzen, erhöhten Spannungspuls $U_P$ (z.B. $U_P$ =12$V$ oder $U_P$ = 24$V$) eine schnelle und definierte Öffnung des Mikroventils 1 erreicht. Ist das Mikroventil 1 einmal geöffnet genügt eine tiefere Haltespannung

$U_H$ ($U_H$ =2-3$V$) für den Rest der Öffnungszeit. Weiter bezeichnet:

$$T \text{ die Periodendauer } (T = \frac{1}{Frequenz})$$

$t_0$ die Ventilöffnungszeit (Mengensteuerung in Abhängigkeit vom Druck)

$t_P$ die Peak-Pulszeit (abgestimmt auf Ventil und Einsatz, im Betrieb nicht mehr verändert)

$t_H$ die Haltezeit

$U_P$ die Peak-Öffnungsspannung

$U_H$ die Haltespannung

Die minimale Öffnungszeit für eine definierte Öffnung des Mikroventils 1 ist dabei:

$$t_{0\,min} = t_P \text{ (bei den erfindungsgemässen Grundvarianten ist typischerweise } t_P = 150 \mu s \text{ )}$$

Die maximale Öffnungszeit pro Zyklus errechnet sich aus der Periodendauer minus Ventil-Schliesszeit:

$$t_{0\,max} = T - t_R \text{ (wobei } t_R \text{ die Responsezeit des Ventils bezeichnet)}$$

Für die erfindungsgemässen Ventile ist üblicherweise mit $t_R \approx 200\ \mu s$ zu rechnen, wobei der Wert jedoch stark abhängig ist vom Einsatz und vom Umfeld.

Da die Spule 17 eine induktive Last darstellt, wird der Verlauf der Steuerspannung in der Realität verzerrt. Die Steuerelektronik muss durch geeignete Massnahmen die Selbstinduktion der Spule 17 nach dem Abschalten möglichst schnell vernichten um negative Einflüsse vor allem bei hohen Frequenzen oder wenn exakte Schliesszeiten benötig sind zu verringern. Letzteres ist zum Beispiel in der Dosiertechnik der Fall.

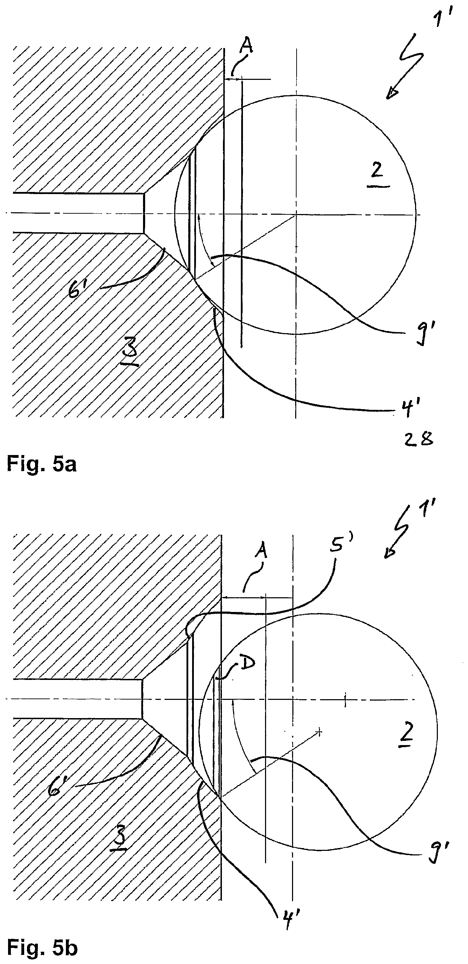

Die **Figuren 5a und 5b** zeigen eine vergrösserte Darstellung der Ventilkugel 2 in einem Ventilsitz 3 mit grossem Auslassbereich 6' und grossem Führungsbereich 4' und entsprechend verkleinertem Dichtbereich 5', bei geschlossenem und offenem Mikroventil 1'. Diese Geometrie stellt eine optimierte Ausführung dar zur Führung der Ventilkugel 2 nur über den Ventilsitz 3. Durch den grossen Grundkonus oder Auslassbereich 6' bleibt der Führungswinkel 9' relativ gross, trotz grösserem Führungsbereich 4'. Die Ventilkugel 2 reibt auch bei 0.1 mm Hub nicht über den Führungsbereich 4' hinaus, und die maximal mögliche seitliche Auslenkung der Ventilkugel 2 hat annähernd den gleichen Wert wie der Hub H. In der Doppelschliffgeometrie gemäss der Figur 5 ist der Ventilsitz mit relativ kleinem Führungsbereich ausgebildet. Die Ventilkugel lenkt entsprechend bei grösserem Hub massiv zur Seite aus, und die Dichtzone reibt über den Radius zwischen Sitzstirnfläche und Führungsbereich, sobald der Hub grösser als 0.02mm ist. Die gezeigte Geometrie eignet sich daher vor allem für Niederhubeinsatz und für Einsatz mit Ankerführungen, wie sie zum Beispiel im Folgenden noch genauer beschrieben werden.

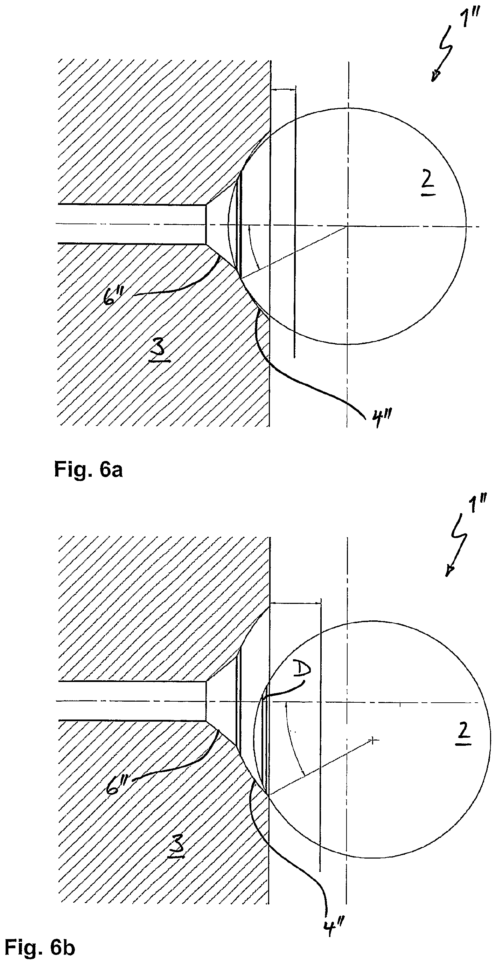

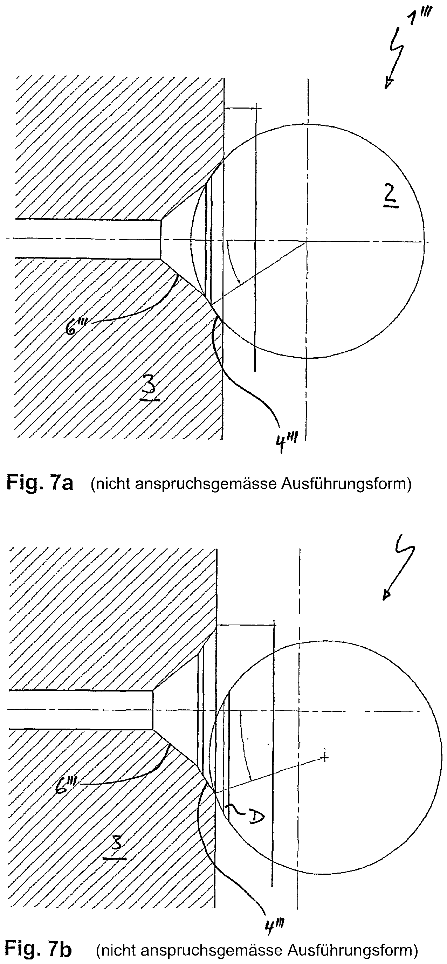

In der Abbildung 5b, und in den nachfolgend beschriebenen Figuren 6b und 7b, die die erfindungsgemässen Ausführungsformen jeweils im offenen Zustand zeigen, ist an der Kugel eine Dichtzone D', die im geschlossenen Zustand mit dem Dichtbereich 5' zusammenwirkt angedeutet. Diese Dichtzone ist rein funktional und nur zeichnerisch angedeutet. Die Kugeloberfläche weicht in dieser Dichtzone nicht von der Kugelform ab.

In den **Figuren 6a und 6b** sind vergrösserte Darstellungen der Ventilkugel 2 in einem Ventilsitz 3 in einem weiteren Ausführungsbeispiel mit kleinem Auslassbereich 6" und grossem Führungsbereich 4", bei geschlossenem und offenem Mikroventil 1" gezeigt. Die Ausführungsform gemäss Figur 6 weist in der Geometrie denselben Grundkonus auf wie das Produkt gemäss Figur 5, der Führungsbereich ist aber massiv vergrössert. Dabei wird erreicht, dass die Dichtzone im Betrieb kaum mehr über den Radius zwischen Sitzstirnfläche und Führungsbereich reibt. Es wird aber dafür in Kauf genommen, dass der Dichtsitz, respektive der Dichtbereich, wesentlich weiter vorne an der Ventilkugel liegt, was zu schlechteren Führungswinkeln in geschlossenem Zustand führt. Auch bei dieser Ausführungsform ist die Auslenkung zur Seite recht stark im ungeführten Zustand des mobilen Ankers.

**Figuren 7a und 7b** zeigen eine vergrösserte Darstellung der Ventilkugel 2 in einem Ventilsitz 3 in einem nicht anspruchsgemässen Ausführungsbeispiel mit grossem Auslassbereich 6''' und kleinem Führungsbereich 4''', bei geschlossenem und offenem Mikroventil 1. Diese Geometrie eine bevorzugte Ausführungsform zur Führung der Kugel primär über den Sitz dar, bei der keine separate Ankerführung eingesetzt wird. Durch den, im Vergleich zu den Ausführungsformen der Figuren 5 und 6, etwas grösseren Grundkonus, der sich im relativ grossen Auslassbereich niederschlägt, bleibt der Führungswinkel relativ gross, trotz grösserem Vorschliff. Die Dichtzone reibt auch bei 0.1 mm Hub nicht über die Berührungszone am Radius zwischen Sitzstirnfläche und Führungsbereich, und die Seitenauslenkung ist fast nur noch 1 : 1 zum Hub. Abstand A zwischen einer Ankerhülse 22 welche die Kugel 2 hält und in der Figur nicht weiter dargestellt ist und Sitzstirnfläche 28 ist nun auf einem Minimum von ca. 0.067mm, das nicht unterschritten werden sollte, um nicht weitere Restriktion in das System zu bringen.

Nachfolgend sind typische Kenndaten einer beispielhaften Ausführungsform wiedergegeben:

| Eigenschaft | Wert |
| --- | --- |
| Düsendurchmesser | ø 0.15 mm. |
| Druckbereich | 0 - 20 bar (typischer Einsatz 0,3 - 1,5 bar) |
| Filtration | 17$\mu$m (Inline-Anordnung am Einlass) |
| Dosierbare Medien | Wasser und Lösungsmittel oder Reagenzien; Tinten auf der Basis von Wasser, N-Propanol, DMSO, MEK sowie andere Lösungsmittel Unter bestimmten Bedingungen auch flüssige Kleber, Weichmacher, Öle, Detergenzien, Gase. |
| Medienberührte Materialien | Edelstahl, Saphir, Rubin |
| Elektrische Ansteuerung Elektrische Ansteuerung | Vorzugsweise Peak + Hold Ansteuerung Peak-Spannung: 12 oder 24V Haltespannung: 2 - 3 V Wenn die Speisung nicht mit Peak + Hold erfolgt, muss die DC-Betriebsspannung im Bereich der Haltespannung sein. |
| Sputenwiderstand | 9.2 Ohm |
| Max.Spulentemperatur | |

Beispielhafte Dynamische Kenndaten (Werte bezogen auf N-Propanol und 0.7 bar Druckdifferenz):

| Eigenschaft | Wert |
| --- | --- |
| Max. Durchfluss bei dauernder Öffnung | 8 ml/min |
| Min. Dosiermenge (Einmaliger Öffnungspuls 150$\mu$s) | 20 nl |
| Wiederholgenauigkeit (ohne Feedbackregelung) Wiederholgenauigkeit (mit Feedbackregelung) Typische Ansprechzeit Maximale Dosierfrequenz | < 5% CV* < 2% CV* 200 $\mu$s ~ 2 kHz* |
| *Abhängig von Umfeld und Applikation | |

In weiteren vorteilhaften Ausführungsformen der erfindungsgemässen Ventile wird die Führung der Schliesskugeln und des mobilen Ankers ganz oder teilweise von einer multifunktionalen Ankerführung übernommen, die auch als Sitzhalterung wirkt.

Halterung und Einbau von Ventilsitz und Mobilanker sind von zentraler Bedeutung im hartstoffdichtenden Mikroventil. Der Mobilanker soll beweglich und leichtgängig gelagert sein, und trotzdem jederzeit seine Schliessposition im Ventilsitz möglichst direkt wieder finden. Gleichzeitig soll höchste Bewegungsdynamik gewährleistet sein, und trotzdem sollen die Bauteile geschont werden, um eine möglichst hohe Lebensdauer zu erreichen.

Der Ventilsitz oder Düsenstein muss gegen das Ventilgehäuse abgedichtet sein und er muss nach der Montage genau in Position bleiben. Der Düsenaustritt soll möglichst frei zugänglich sein, ohne störende Bauteile rundum.

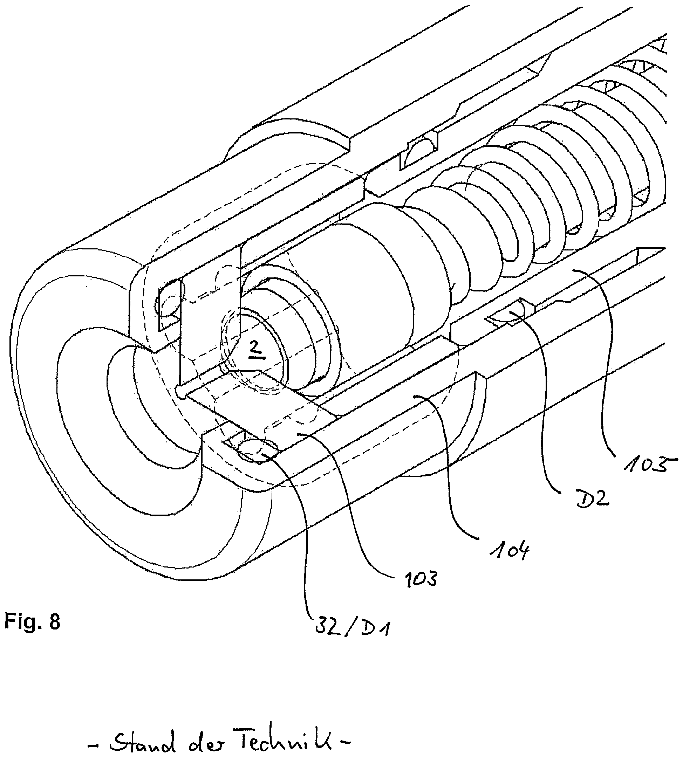

Von der Anmelderin ist das in der **Figur 8** dargestellte Führungssystem für Mikroventile bekannt, das aus montagetechnischen Gründen ein mehrteilig ausgeführtes Gehäuse bedingt. Dies führt dazu, dass mindestens zwei Dichtstellen D1, D2 zwischen den Gehäuseteilen 104, 105 untereinander und zwischen dem Gehäuseteil 104 und dem Ventilsitz 103 nötig sind, um sicherzustellen, dass kein zu dosierendes Medium unkontrolliert austreten kann. Um den Durchmesser der Ventile klein zu halten ist ein erster Dichtring 32 an eine erste Dichtstelle an die untere Stirnfläche des Ventilsteins 103 gelegt. Der Düsenaustritt ist dadurch vertieft, respektive gegenüber der Unterseite des Ventils nach oben zurückversetzt und nicht frontbündig. Die Hauptprobleme bei den bekannten Führungssystemen ergeben sich durch die hohen Anforderungen an die Fertigungstoleranzen, da sich die Herstellungsfehler der einzelnen Bauteile aufsummieren können und zu einem Gesamtfehler führen, der ausserhalb der zulässigen Toleranz für die Führung liegt. Um trotz dieser Kettentoleranz-Effekte Rundheit der Führung zum Ventilsitz 103 zu gewährleisten sind sehr enge Toleranzen für die einzelnen Bauteile nötig, die die Herstellung aufwändig machen und verteuern.

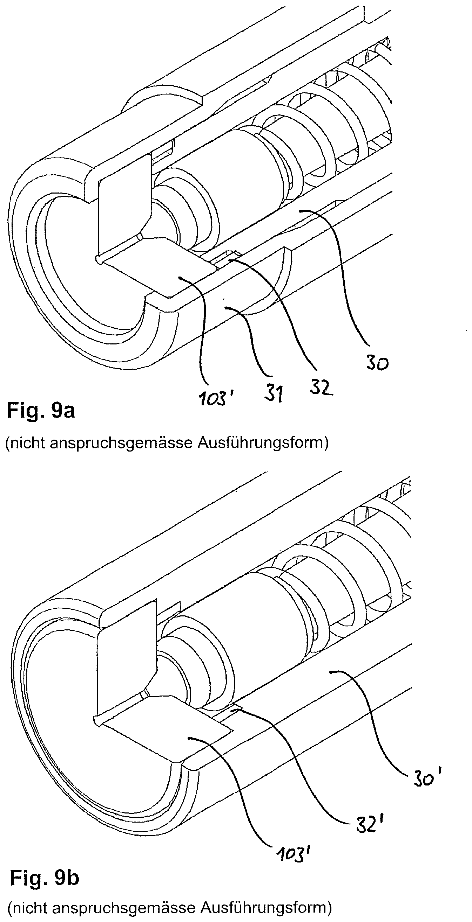

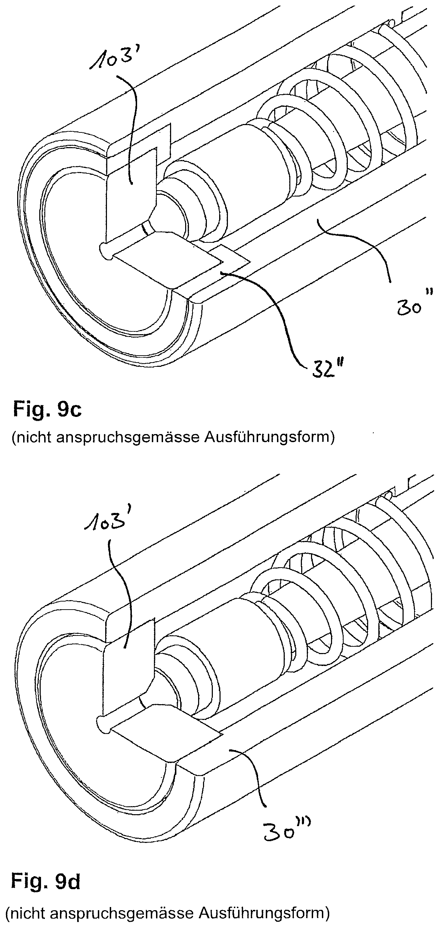

Die oben bereits beschriebenen nicht anspruchsgemässen Ausführungsformen, bei denen die Führung rein über das Zusammenwirken zwischen Ventilkugel und Ventilsitz erfolgt, sind besonders vorteilhaft bei kleinen Hüben im Bereich unter 0.04 mm. Da der Führungsbereich bei diesen Ausführungsformen direkt im Ventilsitz angeordnet ist, werden die negativen Kettentoleranz-Effekte zuverlässig vermieden. Die Führung des mobilen Ankers beim Öffnen und Schliessen des Ventils erfolgt über die Führung der Kugel im vorgängig beschriebenen Führungsbereich im Ventilsitz. Verschiedene Möglichkeiten zur Befestigung und Abdichtung von Ventilsitzen mit integriertem Führungsbereich gegenüber dem Ventilgehäuse sind in der **Figur 9,** eine nicht anspruchsgemässe Ausführungsform dargestellt. Die **Figur 9a** zeigt eine Schraubversion, bei der Ventilsitz 103' mit einer Schraubkappe 31 am unteren Ende des Ventilgehäuses 30 befestigt ist, und ein Dichtring 32 aus PEEK einen Fluidaustritt zwischen Ventilsitz 103', Gehäuse 30 und Schraubkappe 31 verhindert. In der **Figur 9b** ist der Ventilsitz 103' direkt in eine entsprechende Aufnahme im Ventilgehäuse 30' gepresst, und ein Dichtring 32' aus PEEK (Polyetheretherketon) dichtet wiederum den Fluidraum im Gehäuse 30' gegen den Ventilsitz 103' ab. Eine weitere Pressversion mit einem grösseren Dichtring 32", wiederum vorzugsweise aus PEEK, ist in der **Figur 9c** dargestellt. Der Dichtring 32" umschliesst die seitliche Mantelfläche des Ventilsitzes 103' völlig und bildet auch den oberen Anschlag aus, so dass der Ventilsitz, der Vorzugsweise aus einem Hartstoff wie Keramik oder Saphir gefertigt ist, nicht mit dem Metallgehäuse 30" in Kontakt kommt. Die Halterung der spröden Ventilsitze im relativ elastischen PEEK Dichtring 32" hat sich insbesondere beim Einpressen des Ventilsitzes während der Fertigung als sehr vorteilhaft erwiesen. In der **Figur 9d** ist eine weitere Ausführungsform dargestellt, bei der der Ventilsitz 103' direkt in einen Aufnahmebereich des Ventilgehäuses 30''' eingepresst wird und die Abdichtung zwischen beiden Bauteilen durch eine flächige Verklebung erreicht wird.

Weitere Ausführungsformen der erfindungsgemässen Mikroventile, die im Folgenden genauer beschrieben werden, kommen vorzugsweise bei grösseren Hüben von über 0.04 mm zum Einsatz. Hier wird mit einem einzigen multifunktionalen Führungselement sowohl der Ventilsitz gehalten und gedichtet, als auch der Mobilanker im vorderen Bereich mit einer Spielpassung genau geführt. Das Führungselement ist vorzugsweise aus Polyetheretherketon (PEEK) gefertigt, einem teilkristallinen Hochleistungskunststoff, der erstklassige mechanische Eigenschaften und eine sehr gute Chemikalien- und Temperaturbeständigkeit aufweist.

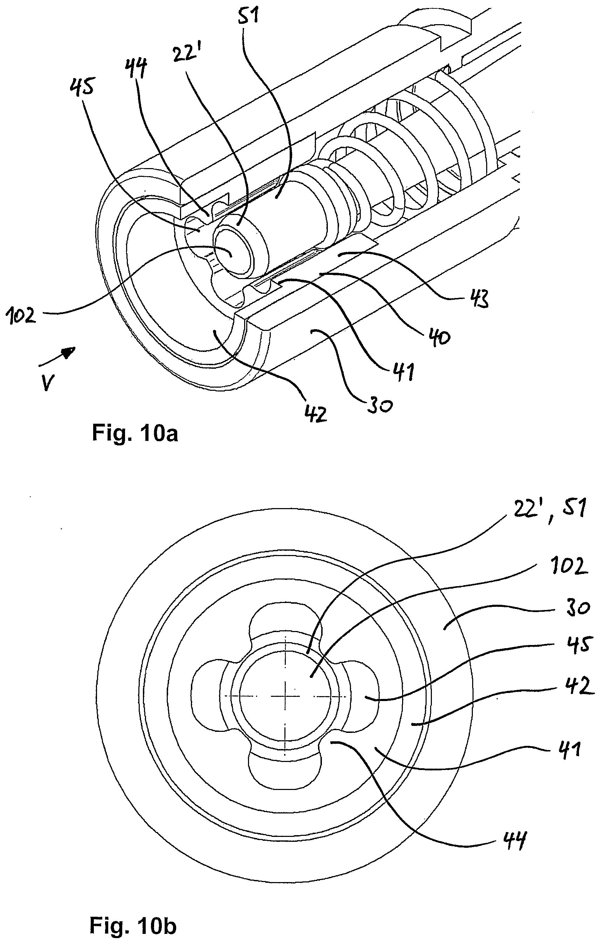

In der **Figur 10a** ist ein unterer Endbereich, auch Frontbereich genannt, eines Mikroventils gemäss einer bevorzugten Ausführungsform bei dem der Ventilsitz weggelassen ist, teilweise geschnitten dargestellt. In das, im Wesentlichen zylindrische, Ventilgehäuse 30 ist ein einstückiges mit einer Stufe versehenes Führungselement 40 zur Aufnahme des Ventilsitzes 103 eingesetzt. Die Abstufung 41 unterteilt das Führungselement 40 im wesentlichen in zwei Bereiche, wobei der Ventilsitz 103 in einem unteren kreiszylindrisch ausgebildeten Aufnahmebereich 42 eingesetzt ist, dessen Höhe derart auf die Höhe des Ventilsitzes abgestimmt ist, dass dieser mit der oberen Sitzstirnfläche an der Abstufung 41 anzuliegen kommt und die entgegengesetzten auslassseitigen Stirnflächen miteinander fluchten. Der obere Bereich 43 des Führungselements 40 übernimmt die eigentliche Führungsfunktion und weist vier nach innen ragende Führungsstege 44 auf die gleichmässig voneinander beabstandet vier Fluidkanäle 45 definieren, die jeweils zwischen benachbarten Führungsstegen 44 verlaufen. Die vier Führungsstege 44 verlaufen im dargestellten Ausführungsbeispiel achsparallel zur und nach innen ausgerichtet auf die Ventilmittelachse. Die Führungsstege 44 definieren eine koaxial zur Ventilmittelachse liegende kreiszylindrische Führungszone 46 in der eine Führungshülse 51 des mobilen Ankers 16' mit geringem Spiel, vorzugsweise einige Hundertstel Millimeter, geführt ist. Dieses Spiel ist vor allem durch die Fertigungstoleranzen bedingt, können aber bei entsprechender Präzision noch enger gewählt werden. Am unteren Ende der Führungshülse 51 sitzt koaxial die Aufnahme 22' für die Ventilkugel 102.

In **Figur 10b** ist eine Ansicht in Richtung V auf die Führungszone 46 der Ausführung gemäss Figur 10a dargestellt. Deutlich sichtbar sind nun die Fluidkanäle 45, welche durch die Führungsstege 44 definiert werden. Die Führungshülse 51 wird durch die Führungsstege 44 mit geringem Spiel geführt.

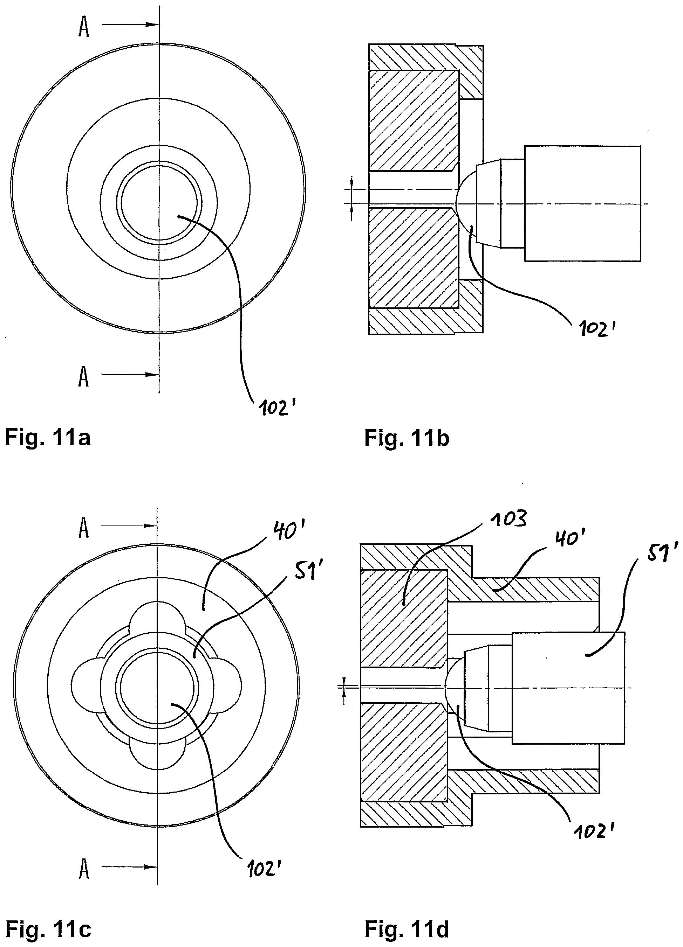

Die **Figur 11** zeigt in einer vergleichenden Gegenüberstellung in jeweils einer Querschnittsansicht und einer seitlichen Ansicht die Auslenkung von Ventilkugel und mobilem Anker bei einem Hub von 0.1 mm in einem Ventil gemäss dem Stand der Technik ohne Führung im Ventilsitz und ohne Führungselement (Figuren 11a und 11b) und bei einem Ventil gemäss der vorliegenden Erfindung mit einteiligem Führungselement (Figuren 11c und 11d). Bei der ungeführten Version gemäss der Figuren 11a und 11b lenkt die Ventilkugel 102' stark, das heisst um mehr als die Hubhöhe (0.174 mm im dargestellten Beispiel), aus der Mitte aus, was ganz offensichtlich Nachteile in Bezug auf Dynamik, Lebensdauer und Strahlbild mit sich bringt. Bei der geführten Version gemäss der Figuren 11c und 11d hat die Kugel dagegen primär Dichtarbeit zu verrichten, und kaum Führungsarbeit, da die Auslenkung von der Mittelachse auf einen Bruchteil der Hubhöhe reduziert ist (0.034 mm im dargestellten Beispiel).

Es ist ein wesentlicher Aspekt der vorliegenden Erfindung, dass das einstückige Führungselement die Genauigkeit der Positionierung von Ventilsitz und Ventilkugel zueinander wesentlich erhöht, da es die axiale Lage beider Elemente relativ zueinander bestimmt.

Das dargestellte Ausführungsbeispiel der Figur 11 verdeutlicht, dass das Führungselement 40' einerseits den Ventilsitz 103 hält und gegen das Ventilgehäuse abdichtet und gleichzeitig die Führungshülse 51' am untere Ende des mobilen Ankers führt, so dass eine äusserst genaue koaxiale Ausrichtung von Ventilkugel und Ventilsitz aufeinander gewährleistet ist. Beim Öffnen des Ventils wird somit erreicht, dass die Schliesskugel 102' und der Dichtbereich, respektive der Führungsbereich im Ventilsitz annähernd einen gleichmässigen Ringspalt ausbilden, so dass die Strömungsdynamik des zu dosierenden Mediums nicht negativ beeinflusst wird. Das Führungselement 40' optimiert die Führung des mobilen Ankers insbesondere auch bei grossem Öffnungshub, das heisst wenn die Ventilkugel vollständig aus dem Ventilsitz gehoben wird und stellt dadurch eine minimale Belastung beider Dichtungspartner beim Schliessen des Ventils sicher. Dies führt zum Erreichen höchster Lebensdauer und bester Dynamik. Die bevorzugte Ausgestaltung der Fluidführenden Bereiche im Inneren des Führungselementes führt zur grösstmöglichen Reduktion des strömungsdynamischen Totvolumens.

In der Figur 12a ist eine perspektivische Ansicht von schräg oben auf ein teilweise geschnittenes Führungselement 40" gemäss einer weiteren Ausführungsform mit fünf Führungsstegen 44" dargestellt.

Allgemein gilt, dass die Führungselemente gemäss der Erfindung sind vorzugsweise im Kunststoff-Spritzgussverfahren hergestellt. Dies erlaubt es die Stege mit sanften Übergängen und minimiertem Totvolumen herzustellen, wie es in der Ansicht gemäss der Figur 12a gezeigt ist. Die fünf Führungsstege 44" gewährleisten, wie aus der **Figur 12b** ersichtlich ist, eine optimale Führung des Ankers mit der Ventilkugel 2. In der **Figur 12c** ist das Führungs- und Dichtelement 40" im eingebauten Zustand im Schnitt entlang der Ventillängsachse dargestellt. Ebenfalls im Schnitt gezeigt sind der Ventilsitz 3" und der untere Bereich des einteiligen Ventilgehäuses 106. Die unteren Anteile des mobilen Ankers mit Ventilkugel 2, Führungselement 40" und Feder sind ebenfalls im Schnitt dargestellt. In der oberen Hälfte der Ansicht ist ein Fluidkanal 45", in der unteren Bildhälfte ein Führungssteg 44" geschnitten. Die achsiale Lage des mobilen Ankers wird im Bereich durch das Zusammenwirken zwischen der zylindrischen Führungshülse und den fünf Stegen genau definiert. **Figuren 12d und 12e** zeigen eine perspektivische Ansicht von schräg oben bzw. von schräg unten auf ein teilweise geschnittenes Mikroventil im Bereich eines Führungselements gemäss der vorbeschriebenen Ausführungsform mit fünf Führungsstegen, wobei in Figur 12d die Ventilkugel, der mobile Anker sowie die Schliessfeder und in Figur 12e der Ventilsitz nicht dargestellt sind.

Für hochviskose Medien und grössere Durchflussvolumina werden vorzugsweise Ventile gemäss einer weiteren Ausführungsform der Erfindung eingesetzt, wie sie in den **Figuren 13a bis 13c** dargestellt sind. Die Optimierung erfolgt hier zu möglichst grossen Durchflusskanälen 45''' und schmaleren Führungsstegen 44''' bei akzeptabler Ankerführung. Auch sind sanfte Übergänge vorteilhaft und schädliches Totvolumen ist minimiert.

Der Aufbau der Frontpartie mit dem multifunktionalen Dicht- und Führungselement, vorzugsweise aus PEEK, modifiziertem PTFE, PPS Rayton oder anderen hochwertigen technischen Kunststoffen, welche nicht fliessen, eine hohe chemische Beständigkeit und eine hohe Festigkeit aufweisen, erlaubt einen frontbündigen Einbau von Ventilsitz und Düse, was wiederum die einfache Reinigung durch die optimale Zugänglichkeit der Düsenöffnung unter Beibehaltung kürzester Kanallängen in der Düse ermöglicht. Das erfindungsgemässe Dichtkonzept ist zuverlässig und robust und verwendet vorzugsweise chemisch höchst beständige Werkstoffe wie PEEK.

Es ermöglicht den einfachen Einbau und verbilligt dadurch die Montage. Die Herstellung wird zudem durch weniger Bauteile vereinfacht und gleichzeitig wird die Genauigkeit der Führung und der Rundlauf der Teile gegenüber den bekannten mehrteiligen Führungskonzepten verbessert.

Der aus der Düse austretende Fluidstrahl ist präziser und gerader da Fluid gleichmässig rings um die Kugel in den Sitz strömen kann. Das Eliminieren von Totvolumen hinter dem Ventilsitz, verhindert, dass sich störende Blasen ansammeln.

In den Figuren 14 bis 16 sind drei Ausführungsformen gemäss der vorliegenden Erfindung dargestellt, bei denen der Austrittsöffnung des Düsenkanals im Ventilsitz Vorsatzblenden zur Restriktion des Fluidstrahls nachgeschaltet sind.

Im Beispiel gemäss der **Figuren 14a und 14b** weist der Düsenkanal 14 des Ventilsitzes 3 einen Durchmesser von 0.15mm auf. Dem Düsenkanal ist in Strömungsrichtung eine Vorsatzblende 60 mit einer Durchgangsöffnung 61 mit Durchmesser 0.06mm nachgeschaltet. Die Vorsatzblende wird in der dargestellten Ausführungsform im Aussendurchmesser geführt, ist konzentrisch mit dem Ventilsitz im Aufnahmebereich des Führungselements 40 gehalten und liegt fluiddicht am Ventilsitz an. Die Durchgangsöffnung 61, die aus Gründen der Herstellungseffizienz vorzugsweise eine einfache Bohrung ist, ist mittig in der scheibenförmigen Blende angeordnet, so dass sie konzentrisch zum Düsenkanal 14 liegt.

In der Ausführungsform gemäss **Figur 15** ist die die Durchgangsöffnung 61 in der Blende 60' mit einer Fase 63 an der, dem Ventilsitz 3 und damit dem Düsenkanal 14 zugewandten, Seite versehen. Die Fase 63 dient der verbesserten Fluideinleitung in die Verengung der Durchgangsöffnung 61. Der Fasen-Konuswinkel liegt vorzugsweise zwischen 60 und 90°. Aus dem Vergleich zur fasenlosen Blende gemäss Figur 14a wird deutlich, dass oben genannten bevorzugten Werte für die Länge und den Durchmesser der zylindrischen Blenden-Durchgangsöffnung 61 vorzugsweise auch bei der Ausführungsform mit Fase 62 beibehalten werden, was die die Dicke der Blende 60' gegenüber der fasenlosen Blende 60 entsprechend um den von der Fase eingenommenen Bereich vergrössert.

Bei der Ausführungsform gemäss **Figur 16** ist die Blende 60' mit einer Überwurfhülse 70, welche aussen über das Ventilgehäuse 106' gesteckt ist, gegen den Ventilsitz 3 gezogen. Ein Vorteil dieser Befestigungsform besteht darin, dass auf die direkte Befestigung der Blende am Ventilsitz durch kleben oder Schweissen verzichtet werden kann. Für manche Anwendungen ist der Einsatz einer Überwurfhülse 70 jedoch nachteilig, da der Düsenaustritt, respektive der Austritt aus der Vorsatzblende 60' nicht mehr frontbündig ist.

Bevorzugte Anwendungsbereiche der erfindungsgemässen Mikroventile umfassen zum Beispiel:

- Ink Jet-Bereich: Blindenschrift drucken
- Textilmaschinen-Bereich: Schmierung mit Oel
- Uhren-Bereich: Minimalmengenschmierung mit Oel
- Kugellager-Bereich: Fettdosierung
- Maschinen-Bereich: Minimalmengenschmierung mit Oel
- Holzindustrie: Kantenbedruckung
- Parfüm und Aromen-Bereich: kleinste Dosierung von Essenzen und Aromen
- Life Science-Bereich: Dosiersystem für Fraktionensammler, biologische Screenings, Zellenforschung, Analysentechnik, Forschung und Entwicklung.

## Patentansprüche

1. Mikroventil (1) mit einer Ventilkugel (2) und einem Ventilsitz (3) aus einer Hartstoffpaarung aus Edelsteinen einer Düse (14), wobei der Ventilsitz (3) einen Dichtbereich (5) und einen Auslassbereich (6) umfasst und Führungsmittel (4, 40) umfassend einen Führungsbereich (4) und ein Führungselement (40) am Ventilsitz (3) angeordnet sind, wobei der Führungsbereich (4) eine obere Freistellung zur Ventilkugel (2) und zum Dichtbereich (5) bei geschlossenem Mikroventil (1) bildet, , der Führungsbereich (4) einen flachen Übergangswinkel (8) zum Dichtbereich (5) aufweist, der Übergangswinkel (8) zwischen Dichtbereich (5) und Führungsbereich (4) maximal 10°, vorzugsweise <7°, besonders bevorzugt 4° beträgt, der Führungsbereich (4) einen konkaven Bereich aufweist, **dadurch gekennzeichnet, dass** das Führungselement (40) einstückig ausgebildet ist, einen unteren kreiszylindrisch ausgebildeten Aufnahmebereich (42) für den Ventilsitz (3) und einen oberen Führungsbereich (43) zur Führung der Ventilkugel (2) umfasst und der Führungsbereich (43) mindestens drei nach innen ragende Führungsstege (44) und von diesen definierte Fluidkanäle (45) aufweist.

2. Mikroventil (1) nach Patentanspruch 1, **dadurch gekennzeichnet dass** ein Führungswinkel (9) bezogen auf eine Hilfsebene (11) senkrecht zur Ventilmittelachse (10) und einer Tangente zur Ventilkugel (2) durch den Berührungspunkt der Ventilkugel (2) im Führungsbereichs (4) minimal 25°, vorzugsweise >30°, besonders bevorzug 45° beträgt.

3. Mikroventil (1) nach einem der Patentansprüche 1 bis 2, **dadurch gekennzeichnet dass** der Führungsbereich (4) einer Kugelzone entspricht.

4. Mikroventil (1) nach Patentanspruch 3, **dadurch gekennzeichnet dass** der Radius der Kugelzone des Führungsbereichs (4) grösser als der Radius der Ventilkugel (2) ist.

5. Mikroventil (1) nach einem der Patentansprüche 3 oder 4, **dadurch gekennzeichnet dass** das Verhältnis vom Radius der Kugelzone des Führungsbereichs (4) zum Radius der Ventilkugel (2) 1.0-1.2, besonders bevorzugt 1.1 beträgt.

6. Mikroventil (1) nach einem der Patentansprüche 1 bis 5, **dadurch gekennzeichnet dass** der Dichtbereich (5) des Ventilsitzes (3) einen konkaven Verlauf aufweist.

7. Mikroventil (1) nach einem der Patentansprüche 1 bis 6, **dadurch gekennzeichnet dass** der Dichtbereich (5) als eine Kugelzone ausgebildet ist.

8. Mikroventil (1) nach Patentanspruch 7, **dadurch gekennzeichnet dass** der Radius der Kugelzone des Dichtbereich (5) identisch zum Radius der Ventilkugel (2) ist.

9. Mikroventil (1) nach einem der Patentansprüche 1 bis 8 **dadurch gekennzeichnet dass** der Auslassbereich (6) eine untere Freistellung (13) zur Ventilkugel (2) und zum Dichtbereich (5) bei geschlossenem Mikroventil (1) bildet und einen Freistellwinkel (12) zum Dichtbereich (5) 10°-30°, vorzugsweise 15°-25°, besonders bevorzugt 20° beträgt.

10. Mikroventil (1) nach einem der Patentansprüche 1 bis 9, **dadurch gekennzeichnet dass** die Ventilkugel (2) und der Ventilsitz (3) eine Hartstoffpaarung, aus Rubin und Saphir bilden.

11. Mikroventil (1) nach einem der Patentansprüche 1 bis 10, **dadurch gekennzeichnet dass** der Ventilsitz (3) aus Keramik besteht.

12. Mikroventil (1) nach einem der Patentansprüche 1 bis 11, **dadurch gekennzeichnet dass** der Ventilsitz (3) und die Düse (14) einstückig ausgebildet sind.

13. Mikroventil (1) nach einem der Patentansprüche 1 bis 12, **dadurch gekennzeichnet dass** die Ventilkugel (2) in normalem Gebrauch nicht aus dem Ventilsitz (3) heraus bewegt werden kann und nur durch den Führungsbereich (4) geführt ist.

14. Mikroventil (1) nach einem der Patentansprüche 1 bis 13 **dadurch gekennzeichnet, dass** der Übergang zwischen Führungsbereich (4) und Sitzstirnfläche (28) einen Radius (R1) von 0.02 bis 0.1 mm, bevorzugt 0.03 bis 0.06 mm aufweist und die Radien zwischen Führungsbereich und Dichtbereich (R2) und zwischen Dichtbereich und Auslassbereich (R3) kleiner ausfallen.

15. Mikroventil (1) nach Patentanspruch 1 **dadurch gekennzeichnet, dass** die Führungsstege (44) gleichmässig voneinander beabstandet sind und achsparallel zur und nach innen ausgerichtet auf die Ventilmittelachse angeordnet sind.

16. Mikroventil (1) nach einem der Patentansprüche 15 **dadurch gekennzeichnet, dass** das Führungselement (40) den Ventilsitz (103) gegen das Ventilgehäuse abdichtet, den Ventilsitz (103) hält und den mobilen Anker (16) führt, so dass die koaxiale Ausrichtung der Ventilkugel (102) im mobilen Anker (16) und dem Ventilsitz (103) zueinander allein vom Führungselement (40) gewährleistet ist, sobald die Ventilkugel (102) aus dem Ventilsitz (103) gehoben ist.

17. Mikroventil (1) nach einem der vorhergehenden Patentansprüche, **dadurch gekennzeichnet, dass** der Austrittsöffnung des Düsenkanals in Stromrichtung des abzugebenden Fluids eine Vorsatzblende zur Restriktion des Fluidstrahls nachgeschaltet ist.

18. Verfahren zur Herstellung eines Ventilsitzes (3) für ein Mikroventil (1, 1', 1"), **dadurch gekennzeichnet, dass** in einem konusförmigen Ventilsitz (3) koaxial zu einer Ventilmittelachse (10) durch Schleifen mittels zweier Schleifkugeln ein Führungsbereich (4) und ein Dichtbereich (5) eingeschliffen oder durch ein Laserabtragungsverfahren eingebracht werden , als Material für eine Ventilkugel (2) und den Ventilsitz (3) eine Hartstoffpaarung aus Edelsteinen verwendet wird, der Führungsbereich (4) einen flachen Übergangswinkel (8) zu einem Dichtbereich (5) aufweist und der Übergangswinkel (8) zwischen Dichtbereich (5) und Führungsbereich (4) maximal 10°, vorzugsweise <7°, besonders bevorzugt 4° beträgt, der Führungsbereich einen konkaven Bereich aufweist.

19. Verfahren zur Herstellung eines Ventilsitzes (3) nach Anspruch 18, **dadurch gekennzeichnet dass** zum Schleifen des Führungsbereichs (4) und des Dichtbereichs (5) Schleifkugeln mit einem Durchmesserverhältnis von 1.0-1.2, besonders bevorzugt 1.1 verwendet werden.

20. Verfahren zur Herstellung eines Ventilsitzes (3) nach einem der Patentansprüche 18 bis19, **dadurch gekennzeichnet dass** zum Schleifen des Dichtbereichs (5) eine kleinere Schleifkugel als zum Schleifen des Führungsbereichs (4) verwendet wird.

21. Verfahren zur Herstellung eines Ventilsitzes (3) nach einem der Patentansprüche 18 bis20, **dadurch gekennzeichnet dass** zum Schleifen des Dichtbereichs (5) eine Schleifkugel mit identischem Durchmesser wie die Ventilkugel (2) verwendet wird.

22. Verfahren zur Herstellung eines Ventilsitzes (3) für ein Mikroventil (1) nach Patentanspruch18 , **dadurch gekenn-**

**zeichnet dass** einem konusförmigen Ventilsitz (3) mittels Laserabtragverfahren koaxial zu einer Ventilmittelachse (10) ein Führungsbereich (4) und ein Dichtbereich (5) ausgebildet werden.

**Claims**

1. Microvalve (1) with a valve ball (2) and a valve seat (3) made of a hard material pairing of precious stones of a nozzle (14), wherein the valve seat (3) comprises a sealing area (5) and an outlet area (6) and guide means (4, 40), comprising a guide area (4) and a guide element (40), are arranged on the valve seat (3), wherein the guide area (4) forms an upper release to the valve ball (2) and the sealing area (5) when the microvalve (1) is closed, the guide area forms a flat transition angle (8) to the sealing area (5), the transition angle (8) between the sealing area (5) and guide area (4) is a maximum of 10°, preferably < 7°, particularly preferably 4°, the guide area (4) comprises a concave area, **characterised in that** the guide element (40) is designed in one piece, has a lower circular cylindrical receiving area (42) for the valve seat (3) and an upper guide area (43) for guiding the valve ball (2) and the guide area (43) has at least three inwardly projecting guide webs (44) and fluid channels (45) defined by these.

2. Microvalve (1) according to claim 1 **characterised in that** a guide angle (9) relating to an auxiliary plane (11) perpendicular to the valve centre axis (10) and a tangent to the valve ball (2) through the point of contact of the valve ball (2) in the guide area is a minimum of 25°, preferably > 30°, particularly preferably 45°.

3. Microvalve (1) according to any one of claims 1 to 2 **characterised in that** the guide area (4) corresponds to a ball zone.

4. Microvalve (1) according to claim 3 **characterised in that** the radius of the ball zone of the guide area (4) is greater than the radius of the valve ball (2).

5. Microvalve (1) according to any one of claims 3 to 4 **characterised in that** the ratio of the radius of the ball zone of the guide area (4) to the radius of the valve ball (2) is 1.0 - 1.2, in particular 1.1.

6. Microvalve (1) according to any one of claims 1 to 5 characterised that the sealing area (5) of the valve seat (3) is concave.

7. Microvalve (1) according to any one of claims 1 to 6 **characterised in that** sealing area (5) is designed as a ball zone.

8. Microvalve (1) according to claim 7 **characterised in that** the radius of the ball zone of the sealing area (5) is identical to the radius of the valve ball (2).

9. Microvalve (1) according to any one of claims 1 to 8 **characterised in that** the outlet area (6) forms a lower release (13) to the valve ball (2) and the sealing area (5) when the microvalve (1) is closed and a release angle (12) to the sealing area (5) is 10° - 30°, preferably 15° - 25°, particularly preferably 20°.

10. Microvalve (1) according to any one of claims 1 to 9 **characterised in that** the valve ball (2) and the valve seat (3) form a hard material pairing of ruby and sapphire.

11. Microvalve (1) according to any one of claims 1 to 10 **characterised in that** the valve seat (3) is ceramic.

12. Microvalve (1) according to any one of claims 1 to 11 **characterised in that** the valve seat (3) and the nozzle (14) are designed in one piece.

13. Microvalve (1) according to any one of claims 1 to 12 **characterised in that** in normal use the valve ball (2) cannot be moved out of the valve seat (3) and is only guided by the guide area (4).

14. Microvalve (1) according to any one of claims 1 to 13 **characterised in that** the transition between the guide area (4) and seat end face (28) has a radius (R1) of 0.02 to 0.1 mm, preferably 0.03 to 0.06 mm and the radii between the guide area and sealing area (R2) and between the sealing area and outlet area (R3) are smaller.

15. Microvalve (1) according to claim 1 **characterised in that** the guide webs (44) are evenly spaced with regard to each other and area arranged axially parallel to and inwardly aligned with the valve centre axis.

**16.** Microvalve (1) according to claim 15 **characterised in that** the guide element (40) seals the valve seat (103) against the valve casing, holds the valve seat (103) and guides the mobile anchor (16) so that the coaxial alignment of the valve ball (102) in the mobile anchor (16) and the valve seat (103) is solely ensured by the guide element (40) as soon as the valve ball (102) is lifted from the valve seat (103).

**17.** Microvalve (1) according to any one of the preceding claims **characterised in that** downstream of the outlet opening of the nozzle channel in the direction of flow of the fluid there is an add-on diaphragm to restrict the fluid jet.

**18.** Method of manufacturing a valve seat (3) for a microvalve (1, 1', 1") **characterised in that** through grinding by means of two grinding balls, in a cone-shaped valve seat (3), coaxially to a valve centre axis (10) a guide area (4) and a sealing area (5) are ground or are produced through a laser removal process, a hard material pairing of precious stones is used for as the material for a valve ball (2) and the valve seat (3), the guide area (4) has a flat transition angle (8) to a sealing area (5) and the transition angle (8) between the sealing area (5) and the guide area (4) is a maximum of 10°, preferably < 7°, particularly preferably 4°, and the guide area has a concave area.

**19.** Method of manufacturing a valve seat (3) according to claim 18 **characterised in that** for grinding the guide area (4) and the sealing area (5) grinding balls with a diameter ratio of 1.0 1.2, particularly preferably 1.1 are used.

**20.** Method of manufacturing a valve seat (3) according to any one of claims 18 to 19, **characterised in that** for grinding the sealing area (5) a smaller grinding ball is used than for grinding the guide area (4).

**21.** Method of manufacturing a valve seat (3) according to any one of claims 18 to 20 **characterised in that** for grinding the sealing area (5) a grinding ball with an identical diameter to the valve ball (2) is used.

**22.** Method of manufacturing a valve seat (3) for a microvalve (1) according to claim 18 **characterised in that** for a cone-shaped valve seat (2) a guide area (4) and a sealing area (5) are formed coaxially to a valve centre axis (10) by means of a laser removal method.

**Revendications**

**1.** Micro-soupape (1) avec une bille de soupape (2) et un siège de soupape (3) en un couple de matières dures en pierres précieuses, une buse (14), le siège de soupape (3) comprenant une partie d'étanchéité (5) et une partie de sortie (6) et des moyens de guidage (4, 40) comprenant une partie de guidage (4) et un élément de guidage (40) étant placés sur le siège de soupape (3), la partie de guidage (4) créant une position de libération supérieure vers la bille de soupape (2) et vers la partie d'étanchéité (5) lorsque la micro-soupape (1) est fermée, la partie de guidage (4) comportant un angle de transition (8) plat vers la partie d'étanchéité (5), entre la partie d'étanchéité (5) et la partie de guidage (4), l'angle de transition (8) étant d'un maximum de 10°, de préférence < 7°, de manière particulièrement préférentielle de 4°, la partie de guidage (4) comportant une partie concave, **caractérisée en ce que** l'élément de guidage (40) est conçu en monobloc, comporte une partie de logement (42) inférieure conçue en forme de cylindre circulaire pour le siège de soupape (3) et une partie de guidage (43) supérieure, destinée à guider la bille de soupape (2) et la partie de guidage (43) comportant au moins trois barrettes de guidage (44) qui saillissent vers l'intérieur et des canaux à fluide (45) définis par celles-ci.

**2.** Micro-soupape (1) selon la revendication 1, **caractérisée en ce qu'**un angle de guidage (9) en rapport à un plan repère (11) à la perpendiculaire de l'axe médian de la soupape (10) et à une tangente vers la bille de soupape (2) à travers le point de contact de la bille de soupape (2) dans la partie de guidage (4) est d'un minimum de 25°, de préférence > 30°, de manière particulièrement préférentielle, de 45°.

**3.** Micro-soupape (1) selon l'une quelconque des revendications 1 à 2, **caractérisée en ce que** la partie de guidage (4) correspond à une zone sphérique.

**4.** Micro-soupape (1) selon la revendication 3, **caractérisée en ce que** le rayon de la zone sphérique de la partie de guidage (4) est supérieur au rayon de la bille de soupape (2).

**5.** Micro-soupape (1) selon l'une quelconque des revendications 3 ou 4, **caractérisée en ce que** le rapport du rayon de la zone sphérique de la partie de guidage (4) au rayon de la bille de soupape (2) est de 1.0 à 1.2, de manière particulièrement préférentielle de 1.1.

**6.** Micro-soupape (1) selon l'une quelconque des revendications 1 à 5, **caractérisée en ce que** la partie d'étanchéité (5) du siège de soupape (3) présente un trajet concave.

**7.** Micro-soupape (1) selon l'une quelconque des revendications 1 à 6, **caractérisée en ce que** la partie d'étanchéité (5) est conçue sous la forme d'une zone sphérique.

**8.** Micro-soupape (1) selon la revendication 7, **caractérisée en ce que** le rayon de la zone sphérique de la partie d'étanchéité (5) est identique au rayon de la bille de soupape (2).

**9.** Micro-soupape (1) selon l'une quelconque des revendications 1 à 8, **caractérisée en ce que** la partie de sortie (6) créé une position de libération (13) inférieure vers la bille de soupape (2) et vers la partie d'étanchéité (5), lorsque la micro-soupape (1) est fermée et un angle de libération (12) vers la partie d'étanchéité (5) s'élève à de 10° à 30°, de préférence à de 15° à 25°, de manière particulièrement préférentielle à 20°.

**10.** Micro-soupape (1) selon l'une quelconque des revendications 1 à 9, **caractérisée en ce que** la bille de soupape (2) et le siège de soupape (3) forment un couple de matière dure, en rubis et en saphir.

**11.** Micro-soupape (1) selon l'une quelconque des revendications 1 à 10, **caractérisée en ce que** le siège de soupape (3) est en céramique.

**12.** Micro-soupape (1) selon l'une quelconque des revendications 1 à 11, **caractérisée en ce que** le siège de soupape (3) et la buse (14) sont conçus en monobloc.

**13.** Micro-soupape (1) selon l'une quelconque des revendications 1 à 12, **caractérisée en ce qu'**en utilisation normale, la bille de soupape (2) ne peut pas être déplacée hors du siège de soupape (3) et n'est guidée qu'à travers la partie de guidage (4).

**14.** Micro-soupape (1) selon l'une quelconque des revendications 1 à 13, **caractérisée en ce que** la transition entre la partie de guidage (4) et la face frontale du siège (28) présente un rayon (R1) de 0.02 à 0.1 mm, de préférence, de 0.03 à 0.06 mm et les rayons entre la partie de guidage et la partie d'étanchéité (R2) et entre la partie d'étanchéité et la partie de sortie (R3) sont plus petits.

**15.** Micro-soupape (1) selon la revendication 1, **caractérisée en ce que** les barrettes de guidage (44) sont régulièrement écartées les unes des autres et sont placées à axe parallèle de l'axe médian de la soupape et en étant orientées vers l'intérieur vers celui-ci.

**16.** Micro-soupape (1) selon la revendication 15, **caractérisée en ce que** l'élément de guidage (40) assure l'étanchéité du siège de soupape (103) par rapport au corps de soupape, maintient le siège de soupape (103) et guide l'ancre mobile (16), de sorte que l'orientation coaxiale mutuelle de la bille de soupape (102) dans l'ancre mobile (16) et du siège de soupape (103) soit assurée par le seul élément de guidage (40) dès que la bille de soupape (102) est soulevée hors du siège de soupape (103).

**17.** Micro-soupape (1) selon l'une quelconque des revendications précédentes, **caractérisée en ce qu'**en amont de l'orifice de sortie du canal de la buse, dans la direction de circulation du fluide à distribuer est monté un bandeau rapporté pour la restriction du jet de fluide.

**18.** Procédé destiné à fabriquer un siège de soupape (3) pour une micro-soupape (1, 1', 1"), **caractérisé en ce que** dans un siège de soupape (3) de forme conique, de manière coaxiale à un axe médian de la soupape (10), par meulage au moyen de deux billes de meulage, on meule une partie de guidage (4) et une partie d'étanchéité (5) ou on les ménage par un procédé d'enlèvement de matière au laser, en tant que matière pour une bille de soupape (2) et le siège de soupape (3), on utilise un couple de matières dures en pierres précieuses, la partie de guidage (4) présente un angle de transition (8) plat vers une partie d'étanchéité (5) et l'angle de transition (8) entre la partie d'étanchéité (5) et la partie de guidage (4) est d'un maximum de 10°, de préférence < 7°, de manière particulièrement préférentielle de 4°, la partie de guidage comporte une partie concave.

**19.** Procédé destiné à fabriquer un siège de soupape (3) selon la revendication 18, **caractérisé en ce que** pour le meulage de la partie de guidage (4) et de la partie d'étanchéité (5), on utilise des billes de meulage avec un rapport diamétral de 1.0 à 1.2, de manière particulièrement préférentielle de 1.1.

**20.** Procédé destiné à fabriquer un siège de soupape (3) selon l'une quelconque des revendications 18 à 19, **caractérisé en ce que** pour le meulage de la partie d'étanchéité (5), on utilise une bille de meulage plus petite que pour le meulage de la partie de guidage (4).

**21.** Procédé destiné à fabriquer un siège de soupape (3) selon l'une quelconque des revendications 18 à 20, **caractérisé en ce que** pour le meulage de la partie d'étanchéité (5), on utilise une bille de meulage à diamètre identique à celui de la bille de soupape (2).

**22.** Procédé destiné à fabriquer un siège de soupape (3) pour une micro-soupape (1) selon la revendication 18, **caractérisé en ce que** dans un siège de soupape (3) de forme conique, au moyen d'un procédé d'enlèvement de matière au laser, de manière coaxiale à un axe médian de la soupape (10), on créé une partie de guidage (4) et une partie d'étanchéité (5).

**Fig. 1**

**Fig. 2**

Fig. 3a

Fig. 3b

**Fig. 3c**

**Fig. 3d**

**Fig 4**

**Fig. 5a**

**Fig. 5b**

1″

2

6″

3

4″

**Fig. 6a**

1″

D

2

6″

3

4″

**Fig. 6b**

**Fig. 7a** (nicht anspruchsgemässe Ausführungsform)

**Fig. 7b** (nicht anspruchsgemässe Ausführungsform)

**Fig. 8**

2

103

32/D1

104

D2

105

– Stand der Technik –

**Fig. 9a**

(nicht anspruchsgemässe Ausführungsform)

**Fig. 9b**

(nicht anspruchsgemässe Ausführungsform)

**Fig. 9c**

(nicht anspruchsgemässe Ausführungsform)

**Fig. 9d**

(nicht anspruchsgemässe Ausführungsform)

**Fig. 10a**

**Fig. 10b**

A →

A →

102'

**Fig. 11a**

102'

**Fig. 11b**

A →

40'

51'

A →

102'

**Fig. 11c**

103

40'

51'

102'

**Fig. 11d**

Fig. 12a

Fig. 12b

Fig. 12c

**Fig. 12d**

**Fig. 12e**

**Fig. 13a** 40''' 44'''

45''' 40'''

**Fig. 13b**

40'''

45''

44'''

**Fig. 13c**

**Fig. 14a**

**Fig. 14b**

**Fig. 15**

**Fig. 16**

**EP 2 118 542 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19741816
- US 4228821 A
- JP 9068134 B